(19) **Europäisches Patentamt**
**European Patent Office**
**Office européen des brevets**

(11) **EP 4 645 853 A1**

(12) **EUROPEAN PATENT APPLICATION**
published in accordance with Art. 153(4) EPC

(43) Date of publication:
**05.11.2025 Bulletin 2025/45**

(21) Application number: **23912993.5**

(22) Date of filing: **28.12.2023**

(51) International Patent Classification (IPC):
**H04N 19/119** (2014.01)    **H04N 19/157** (2014.01)
**H04N 19/52** (2014.01)    **H04N 19/593** (2014.01)
**H04N 19/11** (2014.01)    **H04N 19/109** (2014.01)
**H04N 19/176** (2014.01)

(52) Cooperative Patent Classification (CPC):
**H04N 19/109; H04N 19/11; H04N 19/119;**
**H04N 19/157; H04N 19/176; H04N 19/52;**
**H04N 19/593**

(86) International application number:
**PCT/KR2023/021895**

(87) International publication number:
**WO 2024/144319 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.12.2022 KR 20220188638**

(71) Applicant: **LG Electronics Inc.**
**Yeongdeungpo-gu**
**Seoul 07336 (KR)**

(72) Inventors:
• **HONG, Myungoh**
  **Seoul 06772 (KR)**
• **PARK, Nae Ri**
  **Seoul 06772 (KR)**
• **JANG, Hyeong Moon**
  **Seoul 06772 (KR)**
• **LIM, Jaehyun**
  **Seoul 06772 (KR)**
• **AHN, Yongjo**
  **Seoul 06772 (KR)**

(74) Representative: **Plasseraud IP**
**104 Rue de Richelieu**
**CS92104**
**75080 Paris Cedex 02 (FR)**

(54) **IMAGE ENCODING/DECODING METHOD USING GPM, METHOD FOR TRANSMITTING BITSTREAM, AND RECORDING MEDIUM STORING BITSTREAM**

(57) Provided are an image encoding/decoding method, a method for transmitting a bitstream, and a computer-readable recording medium storing a bitstream. The image decoding method according to the present disclosure may comprise the steps of: obtaining geometric partitioning mode (GPM) information on the basis of a GPM being applied to the current block; determining at least one of a partition shape of a blending region of the GPM on the basis of the obtained GPM information; refining at least one of the partition shape or the blending region on the basis of template matching; and generating a prediction block for the current block by performing the GPM on the current block on the basis of the refined partition shape or the refined blending region.

[Figure 14]

```
            START
              │
              ▼
      ┌───────────────┐  S1410
  NO  │ IS GPM EXECUTED? │
◄─────┤               │
      └───────┬───────┘
              │ Yes
              ▼
  ┌──────────────────────────┐  S1420
  │ GPM INFORMATION ACQUISITION │
  └────────────┬─────────────┘
               │
               ▼
  ┌──────────────────────────┐  S1430
  │          GPM-TM          │
  └────────────┬─────────────┘
               │
               ▼
  ┌──────────────────────────┐  S1440
  │     TM based reordering   │
  └────────────┬─────────────┘
               │
               ▼
  ┌──────────────────────────┐  S1450
  │     TM based refinement   │
  └────────────┬─────────────┘
               │
               ▼
             END
```

**Description**

[Technical Field]

The present disclosure relates to a method of encoding/decoding an image using a geometric partitioning mode (GPM), a method of transmitting a bitstream, and a recording medium storing a bitstream, and more particularly, to an improved GPM using template matching (TM) or the like.

[Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

The present disclosure is directed to providing an image encoding/decoding method and apparatus with improved encoding/decoding efficiency.

The present disclosure is also directed to providing an image encoding/decoding method and apparatus for executing a geometric partitioning mode (GPM) on the basis of a partition shape and/or blending area which are refined using template matching (TM).

The present disclosure is also directed to providing an image encoding/decoding method and apparatus for executing an improved GPM on the basis of asymmetric blending areas.

The present disclosure is also directed to providing an image encoding/decoding method and apparatus for efficiently generating an intra prediction mode (IPM) list on the basis of a partition shape of a GPM.

The present disclosure is also directed to providing an image encoding/decoding method and apparatus for solving at least some of various problems which are described in the present disclosure as issues of the conventional art.

The present disclosure is also directed to providing a non-transitory computer-readable recording medium for storing a bitstream generated using an image encoding method according to the present disclosure.

The present disclosure is also directed to providing a non-transitory computer-readable recording medium for storing a bitstream that is received and decoded by an image decoding apparatus according to the present disclosure and used for image reconstruction.

The present disclosure is also directed to providing a method of transmitting a bitstream generated using an image encoding method according to the present disclosure.

Technical objects to be achieved in the present disclosure are not limited to those described above, and other technical objects that have not been described above will be clearly understood by those skilled in the technical field to which the present disclosure pertains from the following description.

[Technical Solution]

According to one aspect of the present disclosure, a method of decoding an image performed by an image decoding apparatus, includes acquiring geometric partitioning mode (GPM) information on the basis of application of a GPM to a current block, determining at least one of a partition shape of the GPM and a blending area on the basis of the acquired GPM information, refining at least one of the partition shape and the blending area on the basis of template matching (TM), and generating a prediction block for the current block by executing the GPM on the current block on the basis of the refined partition shape or the refined blending area.

In the method decoding image information, the refining of the partition shape may includes deriving one or more partition shape candidates, selecting one of the partition shape candidates on the basis of TM costs, and refining the partition shape on the basis of the selected partition shape candidate.

In the method decoding image information, the partition shape candidate may include at least one of a partition direction candidate and a distance candidate.

In the method decoding image information, the refining of the blending area may include deriving one or more blending area candidates, selecting one of the blending area candidates on the basis of TM costs, and refining the blending area on the basis of the selected blending area candidate.

In the method decoding image information, the blending area candidates may be derived by adding or subtracting a certain size to or from a signaled blending area of the current block.

In the method decoding image information, both sides of the blending area may have different sizes on the basis of a partitioning boundary of the GPM.

In the method decoding image information, the GPM information may include information on the sizes of both sides.

In the method decoding image information, the GPM information may include information on a reference size of blending areas, and the sizes of both sides may be derived on the basis of the reference size and TM.

In the method decoding image information, the determining of the blending area may include reordering the blending area candidates on the basis of TM, and selecting one of the reordered blending area candidates.

In the method decoding image information, the GPM may be a spatial GPM (SGPM).

The method decoding image information may further includes generating an intra prediction mode (IPM) list to derive an IPM of the current block. IPM candidates included in the IPM list may be derived on the basis of the partition shape of the GPM.

A method of encoding an image performed by an image encoding apparatus, includes determining at least one of a partition shape and a blending area of a geometric partitioning mode (GPM) on the basis of application of the GPM to a current block, wherein the determined partition shape or blending area of the GPM is encoded on the basis of GPM information, refining at least one of the partition shape and the blending area on the basis of template matching (TM), and generating a prediction block for the current block by executing the GPM on the current block on the basis of the refined partition shape or the refined blending area.

A computer-readable recording medium according to another aspect of the present disclosure may store a bitstream generated using an image encoding method or apparatus according to the present disclosure.

According to a transmission method according to another aspect of the present disclosure, a bitstream generated using an image encoding method or apparatus according to the present disclosure may be transmitted.

The features of the present disclosure briefly summarized above are only exemplary aspects of the following detailed description of the present disclosure and do not limit the scope of the present disclosure.

[Advantageous Effects]

According to the present disclosure, it is possible to provide an image encoding/decoding method and apparatus with improved encoding/decoding efficiency.

According to the present disclosure, it is also possible to provide an image encoding/decoding method and apparatus for executing a geometric partitioning mode (GPM) on the basis of a partition shape and/or blending area which are refined using template matching (TM).

According to the present disclosure, it is also possible to provide an image encoding/decoding method and apparatus for executing an improved GPM on the basis of asymmetric blending areas.

According to the present disclosure, it is also possible to provide an image encoding/decoding method and apparatus for efficiently generating an intra prediction mode (IPM) list on the basis of a partition shape of a GPM.

According to the present disclosure, it is also possible to solve at least some of various problems which are described in the present disclosure as issues of the conventional art.

According to the present disclosure, it is also possible to provide a non-transitory computer-readable recording medium for storing a bitstream generated using an image encoding method according to the present disclosure.

According to the present disclosure, it is also possible to provide a non-transitory computer-readable recording medium for storing a bitstream that is received and decoded by an image decoding apparatus according to the present disclosure and used for image reconstruction.

According to the present disclosure, it is also possible to provide a method of transmitting a bitstream generated using an image encoding method according to the present disclosure.

Effects of the present disclosure are not limited to those described above, and other effects that have not been described above will be clearly understood by those skilled in the technical field to which the present disclosure pertains from the following description.

[Description of Drawings]

FIG. 1 is a view showing a video coding system to which an embodiment of the present disclosure is applicable.
FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a set of diagrams illustrating a geometric partitioning mode (GPM) partition according to the present disclosure.

FIG. 5 is a diagram illustrating GPM intra/inter according to the present disclosure.

FIG. 6 is a set of diagrams illustrating available intra prediction mode (IPM) candidates in a GPM with inter and intra prediction modes.

FIG. 7 is a diagram illustrating an extended blending area.

FIG. 8 is a diagram illustrating extension of a GPM partition edge.

FIG. 9 is a diagram of a template and a reference sample used in template-based intra mode derivation (TIMD).

FIG. 10 is a diagram schematically showing histograms of gradients (HoGs).

FIG. 11 is a diagram schematically showing construction of a prediction block when a decoder-side intra mode derivation (DIMD) mode is applied.

FIG. 12 is a diagram illustrating the basic concept of a spatial GPM (SGPM).

FIG. 13 is a set of views illustrating SGPM-related signaling.

FIG. 14 is a flowchart illustrating a GPM decoding method according to the present disclosure.

FIG. 15 shows an example of signaling GPM information.

FIG. 16 is a diagram illustrating refinement of a partition shape according to the present disclosure in detail.

FIG. 17 is an exemplary diagram illustrating partition shape refinement according to the present disclosure.

FIG. 18 is another exemplary diagram illustrating partition shape refinement according to the present disclosure.

FIG. 19 is a diagram illustrating an example of weights for calculating a template cost.

FIG. 20 is a set of diagrams illustrating another example of weights for calculating a template cost.

FIG. 21 is a diagram illustrating still another example of weights for calculating a template cost.

FIG. 22 is a set of diagrams illustrating yet another example of weights for calculating a template cost.

FIG. 23 shows an example of generating a weight map according to the present disclosure.

FIG. 24 shows another example of generating a weight map according to the present disclosure.

FIG. 25 is a diagram illustrating partition shapes of a GPM including new partition shapes.

FIG. 26 is a set of diagrams illustrating a weight acquisition process in detail.

FIG. 27 illustrates an example of acquiring offset X and an offset of FIG. 26.

FIG. 28 is a set of diagrams illustrating blending area candidates.

FIG. 29 illustrates an example of generating a weight map according to embodiment 2 of the present disclosure.

FIG. 30 is a diagram showing selection rates of blending area candidates.

FIG. 31 is a set of diagrams illustrating blending area candidates.

FIG. 32 is a set of diagrams illustrating various examples of weights for calculating a template cost according to the present embodiment.

FIG. 33 is a flowchart illustrating an improvement in a template matching (TM)-based SGPM according to the present disclosure.

FIG. 34 is a diagram illustrating a symmetric blending area.

FIG. 35 is a diagram illustrating an asymmetric blending area according to the present disclosure.

FIG. 36 shows an example of signaling an asymmetric blending area.

FIG. 37 shows an example in which signaling positions of geoBlending_idx0 and geoBlending_idx1 have changed.

FIG. 38 shows another embodiment of signaling an asymmetric blending area.

FIG. 39 is a set of diagrams illustrating combinations of blending area candidates for blending area refinement according to the present embodiment.

FIGS. 40 and 41 are diagrams illustrating an IPM list candidate derivation method according to the present disclosure.

FIG. 42 is a view showing a content streaming system to which an embodiment of the present disclosure is applicable.

[Modes of the Invention]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an MxN block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

Overview of video coding system

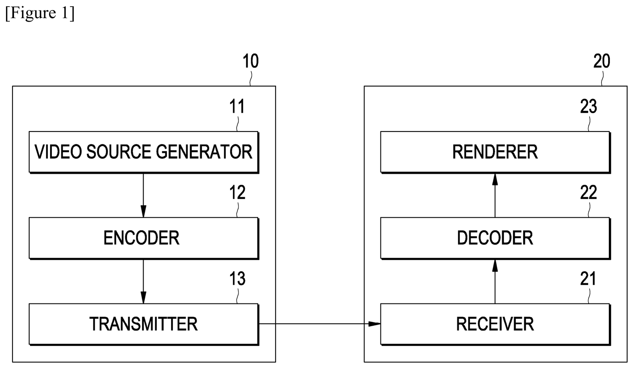

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

Overview of image encoding apparatus

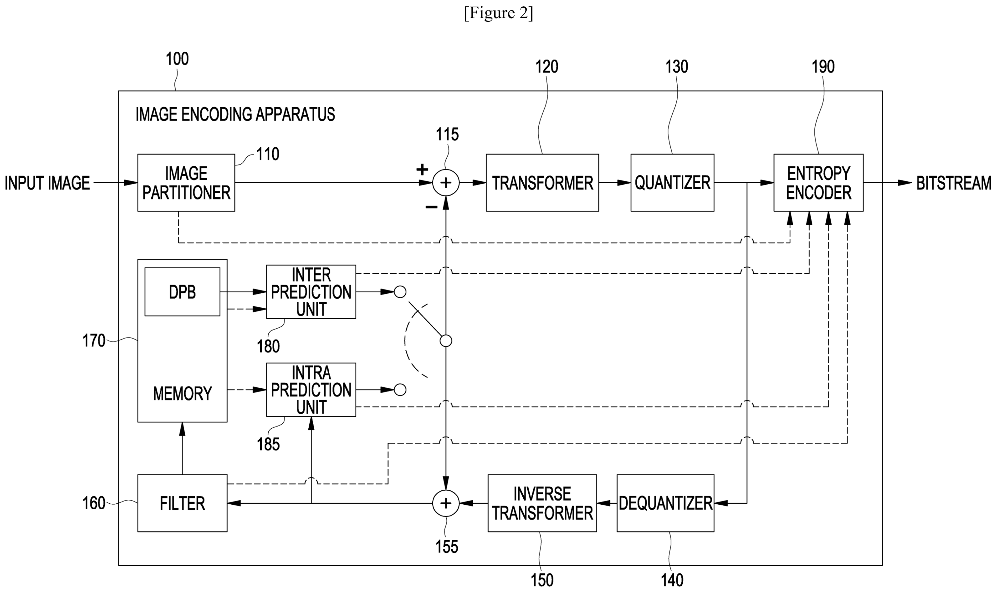

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a esidual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of nondirectional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based n various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

Overview of image decoding apparatus

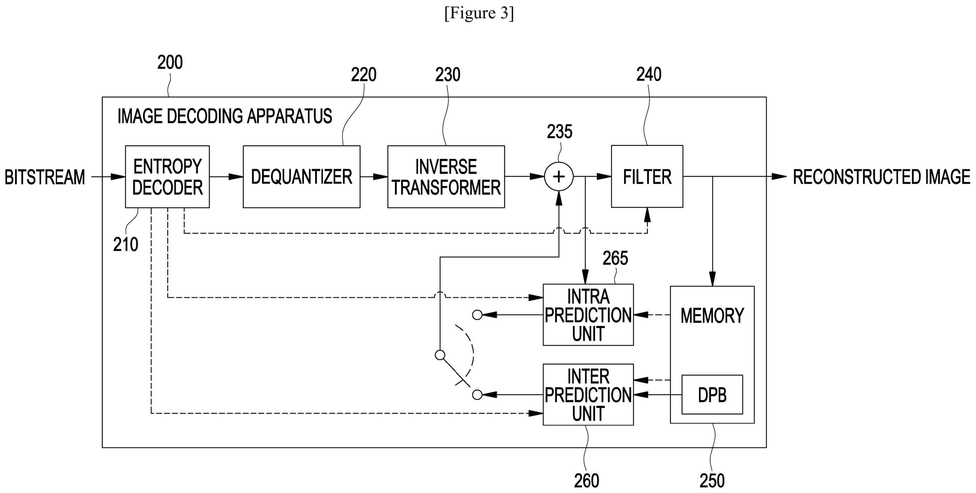

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) ccording to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in he entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter rediction unit 180, and the intra prediction unit 185 of the image encoding apparatus 100 may be equally or correspondingly applied to the filter 240, the inter predictor 260, and the intra predictor 265 of the image decoding apparatus 200.

Geometric partitioning mode (GPM)

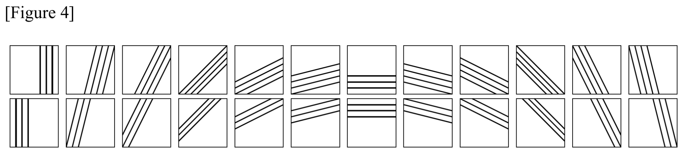

FIG. 4 is a set of diagrams illustrating a GPM partition according to the present disclosure. A GPM partition, that is, a GPM, is a mode that can be supported for prediction, and is one of merge modes including a sub-block merge mode, a combined inter and intra prediction (CIIP) mode, a merge with motion vector difference (MMVD) mode, and a general merge mode. A GPM partition may be signaled using a coding unit (CU)-level flag. A GPM may be supported for all CU sizes that satisfy m, n∈ {36} and w×h=$2^m$×$2^n$ except for 8×64 and 64×8 sizes, and 64 partitions are supportable in total.

According to a GPM, a CU may be divided into two parts by a geometrically positioned straight line. The position of a partition line may be mathematically derived from an angle and offset parameter of a particular partition. A geometric partition of a CU, that is, each portion, may be inter-predicted using unique motion thereof. Only uni-prediction is allowed for each partition, and each portion may be associated with one motion vector and one reference index. These restrictions (uni-prediction motion) are intended for only two motion-compensated predictions to be present for each CU like bi-prediction. Uni-prediction motion for each partition has been described above.

FIG. 4 shows examples of a GPM partition grouped at the same angle. When a GPM is used for a current CU, a geometric partition index that indicates a partition mode (an angle and offset) of geometrically partitioned portions and two merge indexes (one for each partition) may be additionally signaled. A value of a maximum GPM candidate size may be clearly signaled in a sequence parameter set (SPS) and may indicate syntax binarization for a GPM merge index.

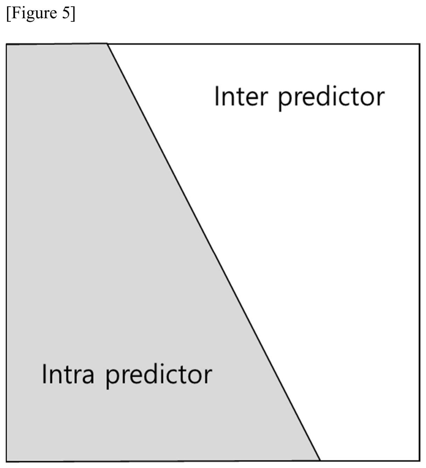

FIG. 5 is a diagram illustrating GPM intra/inter according to the present disclosure. When a GPM is applied, syntax of Table 1 below may be signaled.

[Table 1]

| | |
|---|---|
| **merge_gpm_partition_idx**[ x0 ][ y0 ] | ac(v) |
| **merge_gpm_idx0**[ x0 ][ y0 ] | ac(v) |
| if( MaxNumGpmMergeCand > 2 ) | |
| **merge_gpm_idx1**[ x0 ][ y0 ] | ac(v) |

Angles and distances of Table 2 may be derived on the basis of GPM indexes signaled as shown in Table 1 above.

[Table 2]

| merge_gpm_partition_idx | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| angleIdx | 0 | 0 | 2 | 2 | 2 | 2 | 3 | 3 | 3 | 3 | 4 | 4 | 4 | 4 | 5 | 5 |
| distanceIdx | 1 | 3 | 0 | 1 | 2 | 3 | 0 | 1 | 2 | 3 | 0 | 1 | 2 | 3 | 0 | 1 |
| merge gpm partition idx | 16 | 17 | 18 | 19 | 20 | 21 | 22 | 23 | 24 | 25 | 26 | 27 | 28 | 29 | 30 | 31 |
| angleIdx | 5 | 5 | 8 | 8 | 11 | 11 | 11 | 11 | 12 | 12 | 12 | 12 | 13 | 13 | 13 | 13 |
| dislanceIdx | 2 | 3 | I | 3 | 0 | 1 | 2 | 3 | 0 | 1 | 2 | 3 | 0 | 1 | 2 | 3 |
| merge gpm partition idx | 32 | 33 | 34 | 35 | 36 | 37 | 38 | 39 | 40 | 41 | 42 | 43 | 44 | 45 | 46 | 47 |
| angleIdx | 14 | 14 | 14 | 14 | 16 | 16 | 18 | 18 | 18 | 19 | 19 | 19 | 20 | 20 | 20 | 21 |
| distanceIds | 0 | 1 | 2 | 3 | 1 | 3 | 1 | 2 | 3 | 1 | 2 | 3 | 1 | 2 | 3 | 1 |
| merge gpm partition idx | 48 | 49 | 50 | 51 | 52 | 53 | 54 | 55 | 56 | 57 | 58 | 59 | 60 | 61 | 62 | 63 |
| angleIdx | 21 | 21 | 24 | 24 | 27 | 27 | 27 | 28 | 28 | 28 | 29 | 29 | 29 | 30 | 30 | 30 |
| distanceIdx | 2 | 3 | I | 3 | 1 | 2 | 3 | 1 | 2 | 3 | 1 | 2 | 3 | 1 | 2 | 3 |

One block may be partitioned into two arbitrary areas on the basis of the derived angles and areas. Each area constitutes an individual sub-block, and different motion estimation information may be used for generating separate prediction blocks. The generated estimation blocks may be blended and used as an estimation block of a corresponding block.

To generate a prediction block of each of two sub-blocks, only inter prediction may be used, but according to an embodiment of a GPM intra/inter blending method, intra prediction may be used to generate a prediction block of each area. As an example, a prediction block of one area of the two sub-blocks may be generated using an intra prediction method, and a prediction block of the other area of the two sub-blocks may be generated using an inter prediction method.

GPM with merge motion vector differences (MMVDs)

A GPM may be extended by applying motion vector refinement to GPM unidirectional motion vectors. First, information (e.g., a flag) indicating whether a GPM-MMVD mode is used for a CU to which a GPM is applied (GPM CU) may be signaled. When the GPM-MMVD mode is used, it may be determined whether to signal a motion vector difference (MVD) for each geometric partition of the GPM CU. When an MVD is signaled for each geometric partition, a GPM merge candidate may be selected, and then motion of the corresponding geometric partition may be refined using the signaled MVD information. Other processes may be the same as a general GPM process.

Like an MMVD, the MVD may be signaled as a distance-direction pair. The GPM-MMVD mode may include 9 candidate distances and 8 candidate directions. The 9 candidate distances may include ¼-pel, ½-pel, 1-pel, 2-pel, 3-pel, 4-pel, 6-pel, 8-pel, and 16-pel. The 8 candidate directions may include 4 horizontal/vertical directions and 4 diagonal directions. Also, when pic_fpel_mmvd_enables_flag has a value of 1, the MVD may be left-shifted by 2 like an MMVD.

GPM with inter and intra prediction

In a GPM with inter and intra prediction modes, a weighted sum of samples inter-predicted for each GPM partition area and samples intra-predicted for each GPM partition area may be calculated to generate final prediction samples. The inter-predicted samples may be derived on the basis of an inter GPM. The intra-predicted samples may be derived from an IPM candidate list and an index. The index may be signaled by an encoder. A size of the IPM candidate list may be predefined. For example, the size of the IPM candidate list may be 3.

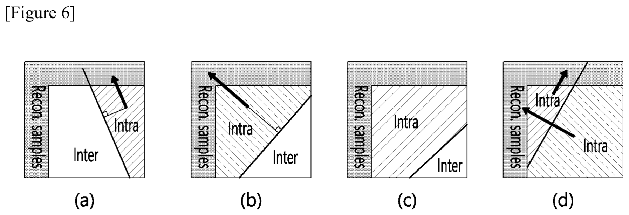

FIG. 6 is a set of diagrams illustrating available IPM candidates in a GPM with inter and intra prediction modes.

Available IPM candidates may include an angle mode parallel to a GPM block boundary (parallel mode), an angle mode perpendicular to a GPM block boundary (vertical mode), and a planar mode. FIGS. 6A, 6B, and 6C are examples of the parallel mode, the vertical mode, and the planar mode, respectively. Further, as shown in FIG. 6D, the GPM with intra and intra prediction modes may be limited, which is intended to reduce signaling overhead of an IPM and avoid an increase in the number of intra predictions made by a hardware decoder. In addition, encoding performance may be improved by introducing a direct motion vector in a GPM blending area and IPM storage.

An IPM-derived parallel mode based on decoder-side intra mode derivation (DIMD) and a neighboring mode may be registered first. Therefore, when there is not the same IPM candidate in a list, a maximum of two IPM candidates derived from DIMD and/or neighboring blocks may be registered. In neighboring mode derivation, a maximum number of positions of available neighboring blocks may be 5. However, available neighboring blocks may be limited by an angle of the boundary of a GPM block as shown in Table 3 below. The positions of neighboring blocks shown in Table 3 may be used in a GPM with template matching (GPM-TM) mode.

[Table 3]

| Angle of GPM | 0 | 2 | 3 | 1 | 5 | 8 | 11 | 12 | 13 | 11 |
|---|---|---|---|---|---|---|---|---|---|---|
| 1st partition | A | A | A | A | L+A | L+A | L+A | L+A | A | A |
| 2nd partition | L+A | L+A | L+A | L | L | L | L | L+A | L+A | L+A |
| Partition angle | 16 | 18 | 19 | 20 | 21 | 21 | 27 | 28 | 29 | 30 |
| 1st partition | A | A | A | A | L+A | L+A | L+A | L+A | A | A |
| 2nd partition | L+A | L+A | L+A | L | L | L | L | L+A | L+A | L+A |

Table 3 above shows positions of available neighboring blocks for deriving IPM candidates on the basis of an angle of a GPM block boundary. In Table 3 above, A and L indicate an upper side and left side of a prediction block. In the present disclosure, all of "1st partition," "first partition," "partition 1," and "partition A" may indicate a first partition of a GPM. Also, in the present disclosure, all of "2nd partition," "second partition," "partition 2," and "partition B" may indicate a second partition of a GPM.

GPM-intra in which intra prediction is performed may be combined with the GPM-MMVD mode. To improve encoding performance, template-based intra mode derivation (TIMD) may be used for IPM candidates of GPM-intra. As an IPM candidate of GPM-intra, a parallel mode may be registered first. Subsequently, IPM candidates of TIMD, DIMD, and neighboring blocks may be registered.

GPM with adaptive blending

In a conventional GPM, final prediction samples may be generated through blending in which a weighted average of two prediction signals is used. Two integer blending matrices WO and W1 may be used. Weights in GPM blending matrices may be derived from a ramp function based on a displacement from a prediction sample position to a GPM partitioning boundary. A size of a blending area may be fixed at 2. In other words, for each of both sides of a GPM partitioning boundary, a blending area may have up to 2 samples.

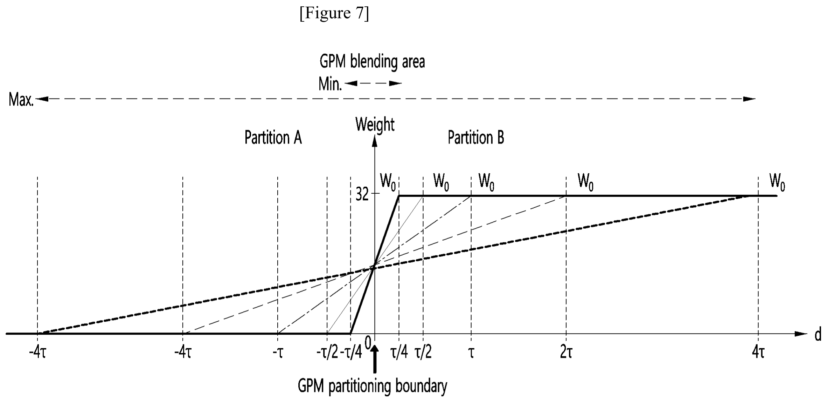

FIG. 7 is a diagram illustrating an extended blending area.

A blending process may be refined by adding 4 blending area sizes. As shown in FIG. 7, added blending area sizes may be 1/4 times, 1/2 times, 2 times, and 4 times a current area size $\tau$. A flag of a CU level may be encoded to signal the fact that a selected blending area size is signaled. Further, extended weighted precision may be used. When extended weighted precision is used, the maximum of weights may change from 8 to 32 to be suited for expanded blending area sizes. As the maximum of weights, 8 may be the maximum of weights in conventional blending processes.

In the example shown in FIG. 7, a size of a GPM blending area may be as small as $\tau/4$ and as large as $4\tau$. In addition, a weight $W_0$ may have a value of 0 to 32. A weight at an arbitrary prediction sample position may be derived using a ramp function based on displacement to the GPM partitioning boundary. FIG. 7 may show a ramp function when the GPM blending area has a certain size.

As described above, blending areas may additionally have a plurality of sizes on the basis of $1\tau$. Here, the reference size of $1\tau$ may be determined on the basis of various methods.

For example, the reference size may be determined on the basis of size information that is clearly signaled for a current block. The size information may directly signal a blending area size. Alternatively, the size information may be index information for a table. In this case, an image encoding apparatus and an image decoding apparatus may share the table (or list) of blending area sizes and signal a blending area size by signaling index information for the table.

Alternatively, the reference size may be a fixed value that is predefined in the image encoding apparatus and the image decoding apparatus. In this case, the reference size may not be signaled.

Alternatively, the reference size may be variably determined on the basis of an encoding parameter for a current image or a current block. For example, the reference size may be variable depending on a size of the current block.

In the present disclosure, a size of a blending area may be expressed in sample units. For example, when a size of a blending area is 4, a blending area may have up to 4 samples on each of both sides of a GPM partitioning boundary.

In addition, in the present disclosure, a blending area size may be a multiple of 2 (2n, n is 0 or a positive integer) or a power of 2 ($2^n$, n is an integer). In this case, signaling information of the reference size may be information for specifying n.

Although it has been described above that the reference size of blending areas is $1\tau$, this is merely for convenience of description, and a size of a blending area is not limited thereto. For example, a blending area size may be $\tau/4$ or $4\tau$ and signaled as any size between the minimum size and the maximum size.

GPM with TM

TM may be applied to the GPM. When the GPM is available for a CU, a CU-level flag may be signaled to indicate whether TM is applied to two geometric partitions. Motion information for each geometric partition may be refined using TM. When TM is selected, a template may be constructed using left neighboring samples, top neighboring samples, or left and top neighboring samples in accordance with a partition angle. Table 4 shows neighboring samples that are used to construct a template of geometric partitions in accordance with a partition angle. In Table 4, A, L, and L+A may represent that a template may be constructed using top neighboring samples, left neighboring samples, and left and top neighboring samples, respectively. In addition, in Table 4, two geometric partitions may be a 1st partition and a 2nd partition. Subsequently, motion information may be refined by minimizing a difference between a current template and a template in a reference picture (reference template). Here, a search pattern of a merge mode in which a half-pel interpolation filter is deactivated may be used in the same manner.

[Table 4]

| Partition angle | 0 | 2 | 3 | 1 | 5 | 8 | 11 | 12 | 13 | 11 |
|---|---|---|---|---|---|---|---|---|---|---|
| 1st partition | A | A | A | A | L+A | L+A | L+A | L+A | A | A |
| 2nd partition | L+A | A | L+A | L | L | L | L | L+A | L+A | L+A |
| Partition angle | 16 | 18 | 19 | 20 | 21 | 21 | 27 | 28 | 29 | 30 |
| 1st partition | A | L+A | A | A | L+A | L+A | L+A | L+A | A | A |
| 2nd partition | L+A | L+A | L+A | L | L | L | L | L+A | L+A | L+A |

A GPM candidate list may be constructed in the following order.

Interleaved list-0 MV candidates and list-1 MV candidates may be derived. The candidates may be directly derived from a regular merge candidate list. Here, the list-0 MV candidates may have higher priority than the list-1 MV candidates. In addition, to remove duplicate MV candidates, a pruning method in which an adaptive threshold based on a current CU size is used may be applied.

Interleaved list-1 MV candidates and list-0 MV candidates may be further derived. The candidates may be directly derived from a regular merge candidate list. Here, the list-1 MV candidates may have higher priority than the list-0 MV candidates. In addition, to remove duplicate MV candidates, the same pruning method in which an adaptive threshold is used may be applied.

Zero MV candidates may be padded until a GPM candidate list is full.

For one CU to which the GPM is applied, GPM-MMVD and GPM-TM may be exclusively available. First, syntax for GPM-MMVD may be signaled to determine an available mode. When both GPM-MMVD control flags are "false," that is, GPM-MMVD is not available for both geometric partitions, a GPM-TM flag may be signaled to indicate whether TM applies to the two geometric partitions. Otherwise, that is, when at least one GPM-MMVD flag is "true," a value of a GPM-TM flag may be inferred as "false."

TM-based reordering for GPM split modes

In TM-based reordering for GPM split modes, motion information of a current GPM block may be given, and TM cost values of the GPM split modes may be calculated. All the GPM split modes may be reordered in ascending order on the basis of TM cost values. Instead of transmitting a GPM split mode, an index that indicates exactly where the GPM split mode is positioned in the reordered list may be signaled. Here, the index may be encoded using Golomb-Rice code.

A method of reordering GPM split modes includes two operations. After reference templates of two geometric partitions in a CU are generated, the method may be performed as follows.

First operation: an operation of extending a GPM partition edge into the reference templates of the two geometric partitions. As a result, 64 reference templates are acquired, and TM cost values may be calculated for the 64 reference templates.

Second operation: an operation of reordering the GPM split modes in ascending order on the basis of the TM cost values. Among the GPM split modes, 32 high-rank split modes may be displayed as available split modes.

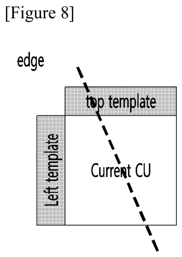

FIG. 8 is a diagram illustrating extension of a GPM partition edge.

As shown in FIG. 8, an edge on a template may be extended from an edge of a current CU. However, a GPM blending process crossing an edge may not be performed in a template area.

After reordering is performed in ascending order using TM cost values, an index indicating one partition mode may be signaled.

TIMD

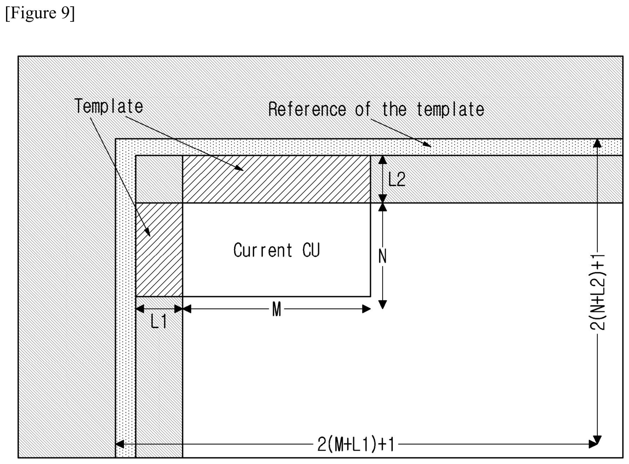

FIG. 9 is a diagram of a template and a reference sample used in TIMD. According to FIG. 9, for IPM intra modes of neighboring intra blocks and inter blocks, sums of absolute transformed differences (SATDs) between a prediction block predicted from a template area and actually reconstructed samples may be calculated, and then a mode with the smallest SATD may be selected as an intra mode of a current block. Alternatively, two modes with the two smallest SATDs may be selected, and then a weighted sum of prediction blocks for the two prediction modes may be calculated for blending and used as a prediction block of the current block.

A method of blending two modes may be applied when the following expression is satisfied.

[Expression 1]

$$costMode2 < 2*costMode1$$

When the above condition is satisfied, two modes may be blended to generate a prediction block. Otherwise, only one mode with the minimum SATD value may be selected. When two prediction blocks are blended, a weight ratio may be as shown in the following expression.

[Expression2]

$$weight1 = costMode2/(costMode1 + costMode2)$$

$$weight2 = 1 - weight1$$

DIMD

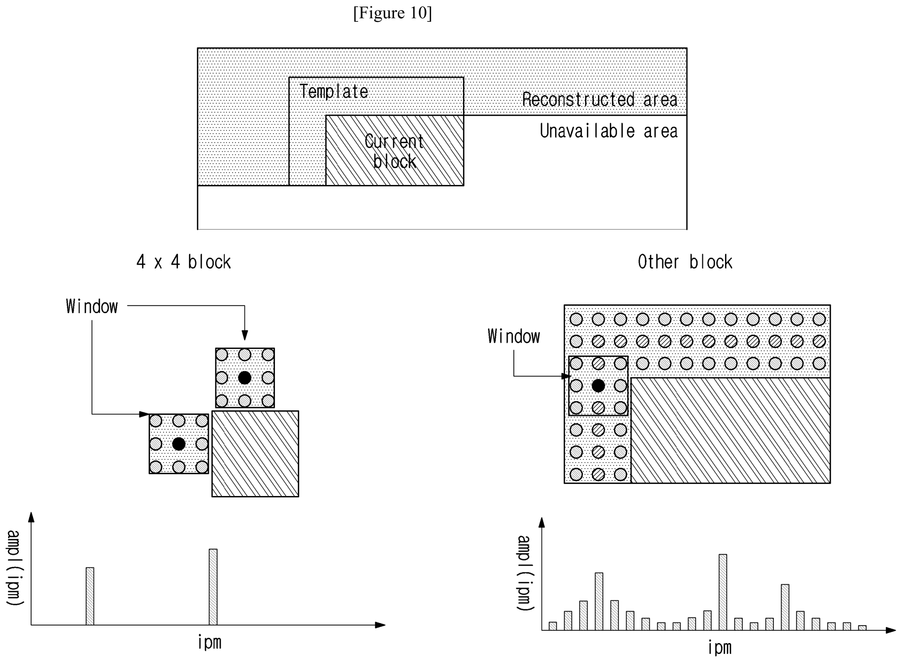

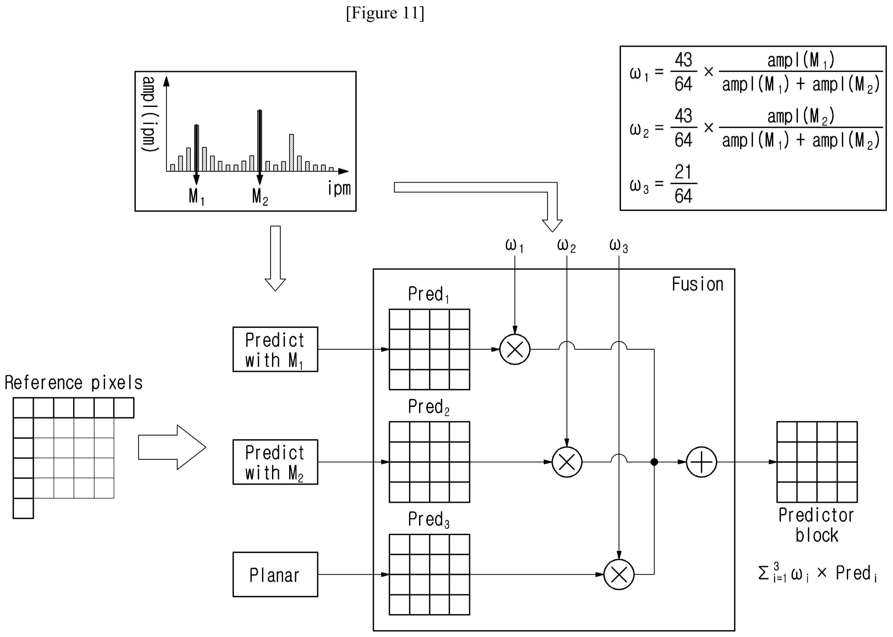

FIG. 10 is a diagram schematically showing histograms of gradients (HoGs), and FIG. 11 is a diagram schematically showing construction of a prediction block when a DIMD mode is applied.

In the DIMD mode, IPM information may not be directly transmitted and may be derived and used by an encoder and a decoder. First, a horizontal gradient and a vertical gradient may be calculated from a second neighboring sample column and row, and an HoG may be generated from the horizontal and vertical gradients. An HoG may be generated as shown in FIG. 10. An HoG may be generated by applying a Sobel filter using 3-pixel L-shaped rows and columns around a current block. When boundaries of the block are present in different coding tree units (CTUs), the boundaries are not used in texture analysis.

Subsequently, as shown in FIG. 11, two intra modes with the two largest histogram amplitudes may be selected, and then a prediction block which is predicted using the selected intra modes is blended with a planar mode to construct a final prediction block. Weights may be derived from amplitudes of the histogram. In addition, a DIMD flag may be transmitted in units of blocks to check whether DIMD is used.

Spatial GPM (SGPM)

Like GPM-inter, an SGPM may include one partition mode and two related IPMs.

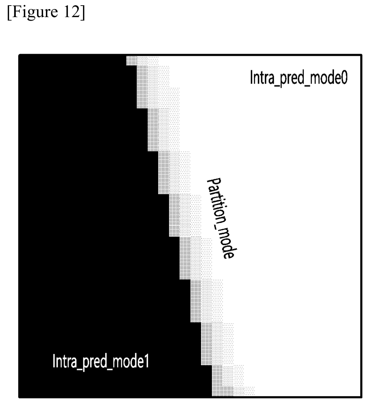

FIG. 12 is a diagram illustrating the basic concept of an SGPM.

As shown in FIG. 12, in an SGPM, one block may be divided into two geometric partitions in accordance with a partition mode. The two geometric partitions may be intra-predicted. To this end, two intra prediction modes intra_pred_mode0 and intra_pred_model may be necessary.

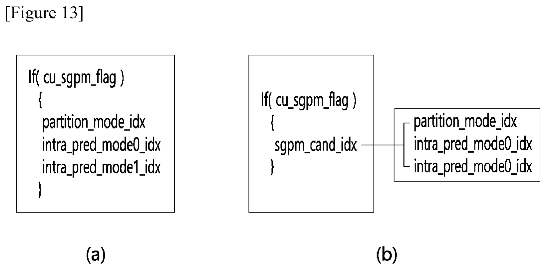

FIG. 13 is a set of views illustrating SGPM-related signaling.

When an SGPM-related mode is directly signaled in a bitstream, as shown in FIG. 13A, a significant number of additional bits may be generated. For example, based on the SGPM being applied to a current CU (cu_sgpm_flag="true"), information indicating a partition mode (e.g., partition_mode_idx) and two pieces of IPM information (e.g., intra_pred_mode0_idx and intra_pred_model_idx) may be transmitted.

To efficiently express necessary partition and prediction information of SGPM in a bitstream, a candidate list may be used. In this case, only a candidate index indicating one candidate may be signaled in a bitstream. Each candidate in the list may be derived as a combination of one partition mode and two IPMs. As shown in FIG. 13B, only a candidate index (e.g., sgpm_cand_idx) may be transmitted to select one candidate in the list, and a combination of one partition mode and two IPMs may be derived on the basis of the selected candidate.

A block size limit for SGPM may be described as follows.

$4<=width<=64$, $4<=height<=64$, $width<height*8$, $height<width*8$, and $width*height>=32$

In other words, SGPM may be applied to blocks with $4\times8$, $8\times4$, $4\times16$, and $16\times4$ sizes

In addition, adaptive blending may be available. When an existing blending width is $\tau$, adaptive blending proposed by the present disclosure may be described as shown in Table 5 below.

[Table 5]

| |
|---|
| If min(width, height)==4, 1/2 $\tau$ is selected |
| else if min(width, height)==8, $\tau$ is selected |
| else if min(width, height)== 16, 2 $\tau$ is selected |
| else if min(width, height)==32, 4 $\tau$ is selected |
| else, 8 $\tau$ is selected |

For example, the first sentence of Table 5 above may indicate that a blending width of $\tau/2$ is selected when the smaller one (min) of a width and a height of a target block is equal to 4. In addition, 26 certain partition modes selected from 64 partition modes may be used.

Further, in each partition mode, an IPM list may be derived from each geometric partition. An IPM list may have a size of 3. An IPM list derivation method may be the same as that used in a GPM intra/inter mode. However, TIMD modes may be excluded, which may be the only difference.

In addition, a template size may be set to 1. In other words, a top template portion may have a height of 1, and a left template portion may have a width of 1.

Possible combinations of one partition mode and two IPMs may be arranged in ascending order on the basis of sums of absolute differences (SADs) between a prediction block and reconstructed samples. A weight of a template may be 1 or 0 depending on a partition mode. A length of the candidate list of combinations may be set to 16.

In addition, TIMD modes (horizontal and vertical modes) may be added to an IPM list and placed at uppermost positions. A size of an IPM list may be maintained at 3.

Detailed embodiments of the present disclosure will be described below.

Embodiment 1

According to the present disclosure, a partition shape of a GPM may be refined on the basis of TM. As described above with reference to Tables 1 and 2, according to conventional GPM-inter, partition shape information merge_gpm_partition_idx of a GPM is signaled to select one of 64 partition shapes. However, all partition shapes are not expressed using angleIdx and distanceIdx defined in Table 2. For example, in Table 2, angleIdx has a value of 0, 2, 3, 4, 5, 8, 11, 12, 13, 14, 16, 18, 19, 20, 21, 24, 27, 28, 29, or 30. Here, angleIdx a and a+16 (a is a real number) indicate the same GPM partition angle. In other words, according to Table 2, GPM partition angles can only be used in 10 limited directions corresponding to angleIdx of 0, 2, 3, 4, 5, 8, 11, 12, 13, and 14.

According to the present disclosure, existing GPM partition shapes may be refined on the basis of TM. In other words, various partition shapes can be supported by refining partition angle and distance on the basis of TM, and high GPM performance improvement can be expected accordingly.

merge_gpm_partition_idx is signaled, and angleIdx and distanceIdx may be derived from merge_gpm_partition_idx on the basis of Table 2. angleIdx is an angle index for a geometric partition, and distanceIdx may be a distance index for a geometric partition.

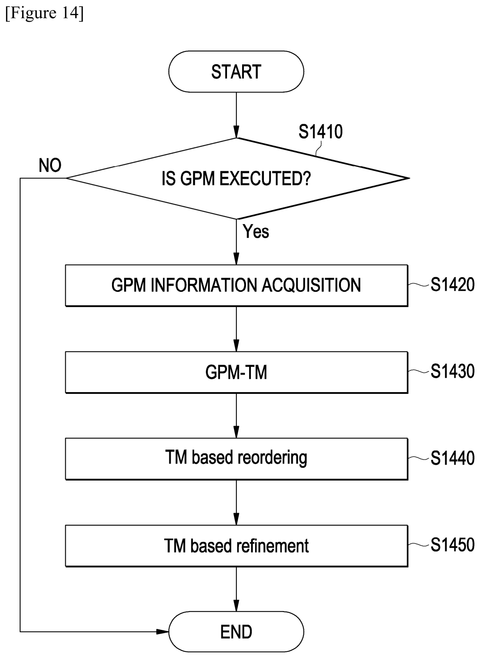

FIG. 14 is a flowchart illustrating a GPM decoding method according to the present disclosure.

Each operation of FIG. 14 is illustrative, and some operations may be omitted or other operations may be added. In addition, the order of operations may change.

In FIG. 14, it may be determined whether GPM is performed on a current block (1410). The determination of operation S1410 may be performed on the basis of a GPM flag that indicates whether a GPM is executed. Alternatively, when the CIIP mode is not selected, parsing of a GPM flag may be omitted, and the GPM flag may be inferred as "true." In other words, when the CIIP mode is not selected, it may be determined in operation S1410 that a GPM is executed.

When it is determined in operation S1410 that a GPM is not executed, GPM-related follow-up operations may not be performed.

When it is determined in operation S1410 that a GPM is executed, information required for executing the GPM may be acquired (S1420). The information required for executing GPM is acquired by parsing information that is signaled in a bitstream.

(First partition, second partition) of a GPM may be a combination of (inter, inter), (intra, inter), or (inter, intra). Which combination corresponds to (first partition, second partition) of the GPM may be signaled for each partition or implicitly derived. Also, the above-described MMVD or extended MMVD may be applied to each partition. In addition, a GPM with TM may be applied. It may be derived on the basis of signaled information which GPM is applied to each partition. In addition, a partition shape and motion vector information or IPM information of each partition may be signaled in the form of an index.

GPM information may be signaled in order of, for example, information about whether a blending area is applied, information about whether MMVD is applied, information about whether an IPM is applied, information about whether TM is applied, partition shape information, and candidate list index information. The order may change, or signaling of other information may be added. In addition, signaling of some information may be omitted, and in this case, a value of the corresponding information may be implicitly derived.

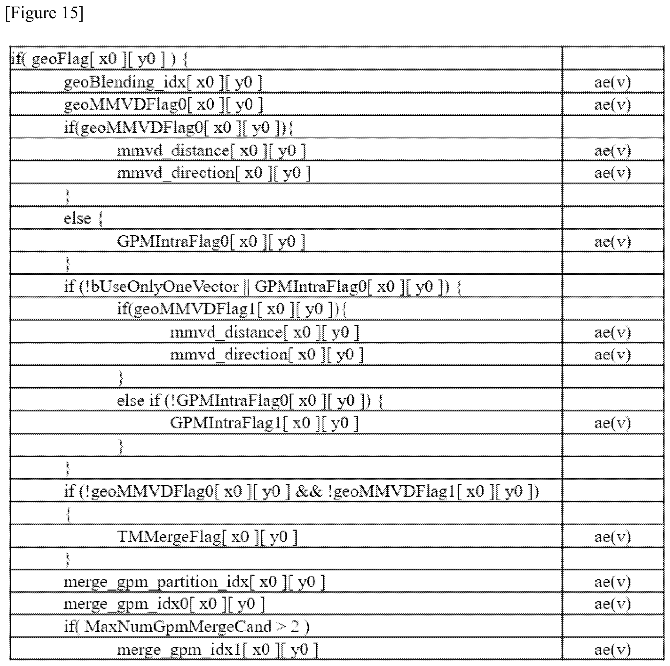

FIG. 15 shows an example of signaling GPM information.

In the information shown in FIG. 15, "[x0][y0]" may mean that the corresponding information is information on a block at the position (x0, y0). The position (x0, y0) may specify an upper left luma sample position of a current encoding block on the basis of an upper left luma sample position of a current picture. In other words, "[x0] [y0]" is intended to specify a block to which the corresponding information is applied, and when the corresponding information is presented as information for a current block, "[x0][y0]" may be omitted.

geoFlag[x0][y0] may be a flag regarding whether a GPM is executed. Signaling of the GPM flag may be omitted. For example, when the CIIP mode is not selected for a current block, the GPM flag may be derived as "true," and a GPM may be executed on the current block.

geoMMVDflagO[x0][y0] may be a flag indicating whether MMVD is applied to the first partition of the GPM.

geoMMVDflag1 [x0][y0] may be a flag indicating whether MMVD is applied to the second partition of the GPM.

GPMIntraFlag0[x0][y0] may be a flag indicating whether intra prediction is applied to the first partition of the GPM.

GPMIntraFlag1[x0][y0] may be a flag indicating whether intra prediction is applied to the second partition of the GPM.

TMMergeFlag[x0][y0] may be a flag indicating whether TM is applied to the GPM. When GPMIntraFlag0[x0][y0] or GPMIntraFlag1[x0][y0] is "true," TMMergeFlag[x0][y0] may be derived as "false" without signaling.

bUseOnlyOneVector may have the value "true" when a current slice is a P slice or the maximum number of GPM candidates is 1, and may have the value "false" otherwise.

MaxNumGpmMergeCand may be the maximum number of geometric partition merge mode candidates.

geoBlending_idx[x0][y0] may be an index for a GPM blending area.

merge_gpm_partition_idx[x0][y0] may be an index that specifies a partition shape of a geometric partition merge mode.

merge_gpm_idx0[x0][y0] may be the first merge candidate index for a geometric partitioning-based motion compensation candidate list when the first partition of the GPM is encoded using an inter prediction mode. When merge_gpm_idx0[x0][y0] does not exist, a value thereof may be inferred as "0." When the first partition of the GPM is encoded using an IPM, merge_gpm_idx0[x0][y0] may be a candidate index for an IPM list.

merge_gpm_idx1[x0][y0] may be the second merge candidate index for the geometric partitioning-based motion compensation candidate list when the second partition of the GPM is encoded using an inter prediction mode. When merge_gpm_idx1[x0][y0] does not exist, a value thereof may be inferred as "0." When the second partition of the GPM is encoded using an IPM, merge_gpm_idx1[x0][y0] may be a candidate index for an IPM list.

Referring back to FIG. 14, GPM-TM may be performed on the basis of the acquired GPM information (S1430). A motion vector acquired in operation S1420 may be enhanced using a position at which a difference between a template of a reference picture and a template adjacent to a current block is minimized.

Subsequently, TM-based reordering may be performed (S1440).

Specifically, a cost between the template of the reference picture and a template adjacent to a current block is calculated for the GPM partition shape candidates of Table 2, and the GPM partition shape candidates may be rearranged in ascending order of cost value. Accordingly, merge_gpm_partition_idx may be encoded using variable-length binary code and signaled. As an example, Golomb-Rice code may be used.

In addition, in operation S1450, TM-based refinement may be performed. Specifically, a cost (template cost) between the template of the reference picture and a template adjacent to a current block is calculated for the GPM partition shape candidates, and one of partition shape candidates with lowest costs is selected such that refinement may be performed. Here, when a template cost for a partition shape of a current block is lower than or equal to template costs of the partition shape candidates, the partition shape may not be refined. Alternatively, when the template cost for the partition shape of the current block is lower than a specific threshold, the partition shape may not be refined. For example, the specific threshold may be the number of pixels in a template area. Alternatively, the specific threshold may be a size (width*height) of the current block.

Partition shape refinement of operation S1450 may be applied when (first partition, second partition) of a GPM is a combination of (inter, inter), (intra, inter), or (inter, intra) or to only some cases thereof. For example, partition shape refinement of operation S1450 may be applied only when (first partition, second partition) of a GPM is a combination of (inter, inter).

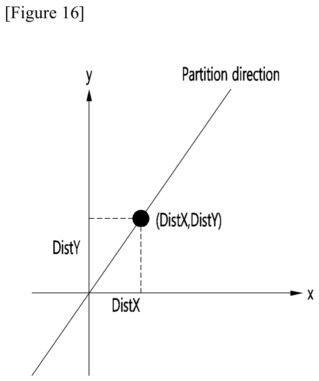

FIG. 16 is a diagram illustrating refinement of a partition shape according to the present disclosure in detail.

For example, a partition direction indicated by angleIdx for (angleIdx, distanceIdx) corresponding to signaled merge_gpm_partition_idx may be expressed as (DistX, DistY). Here, a partition shape candidate may be a combination of a partition direction candidate (CandDistX, CandDistY) and a distance candidate CandDistanceIdx.

In FIG. 16, DistX and DistY may be an x coordinate and a y coordinate for representing a partition direction, respectively.

Partition direction candidates CandDistX and CandDistY may each be limited to a certain range. For example, CandDistX and CandDistY may have values within the following ranges, and $\alpha$ and $\beta$ may be any real numbers.

$$DistX - \alpha \leq CandDistX \leq DistX + \beta$$

$$DistY - \alpha \leq CandDistY \leq DistY + \beta$$

A distance candidate CandDistanceIdx may be limited to a certain range. For example, CandDistanceIdx may have a value within the following range, and $\gamma$ may be any real number.

$$0 \leq CandDistanceIdx \leq distanceIdx + \gamma$$

CandDistanceIdx may be determined on the basis of a block size. For example, when width*height of a current block is smaller than or equal to 64, CandDistanceIdx may be limited to have a value of 3 or less.

In addition, CandDistanceIdx may be determined on the basis of distanceIdx. As an example, when distanceIdx is 3, CandDistanceIdx may be limited to have a value greater than 3.

For example, when merge_gpm_partition_idx has a value of 1 in Table 2 above, it is seen that (angleIdx, distanceIdx) = (0, 3). Therefore, (DistX, DistY) may be expressed as (0, 16), and in this case, the candidate (CandDistX, CandDistY) and CandDistanceIdx may be generated as follows.

For example, CandDistanceIdx may be the same as distanceIdx, and (CandDistX, CandDistY) may be some or all of (-1, 16), (-2, 16), (1, 16), and (2, 16).

For example, (CandDistX, CandDistY) may be the same as (DistX, DistY), and CandDistanceIdx may be 1, 2, 3, 4, 5, 6, 7, and 8.

Alternatively, a candidate may be generated as a combination of ((CandDistX, CandDistY), CandDistanceIdx). For example, the combination may be some or all of ((-1, 16), 1), ((-1, 16), 2), ((-1, 16), 3), ((-1, 16), 4), ((-1, 16), 5), ((-1, 16), 6), ((-1, 16), 7), and ((-1, 16), 8).

For example, a partition shape candidate may be excluded in the following cases.

The case where the partition shape candidate is the same is a partition shape of Table 2 above.

The case where a template cost cannot be calculated because the partition shape candidate is outside of a template area.

The case where a position of GPM partitioning may be segmented on the basis of a tree (a quad-tree (QT), a binary-tree (BT), or a ternary-tree (TT)).

According to an embodiment, when (first partition, second partition) of GPM is (intra, inter) or (inter, intra) and (CandDistX, CandDistY) is different from (DistX, DistY), an IPM applied to an intra partition may be changed. For example, when an intra prediction mode mapped to (DistX, DistY) is p and an intra prediction mode CandAngleMode mapped to (CandDistX, CandDistY) is q, an intra prediction mode applied to an intra partition may be changed from ipm to ipm+(q-p) (p and q are real numbers).

When partition shape refinement is applied to the case where (first partition, second partition) of GPM is (inter, intra) or (intra, inter), a predictor of a current block may be generated using the same mode as an IPM that is used in the template area to calculate a template cost.

In addition, an intra prediction mode mapped to, for example, (x, y) may be as shown in Table 6 below (k is a real number).

[Table 6]

| (x, y) | (k, k) | (3k, 4k) | (k, 2k) | (3k, 8k) | (k, 4k) | (3k, 16k) | (k, 8k) | (k, 16k) | (4k, 3k) | (2k, k) | (8k, 3k) | (4k,k) | (16k, 3k) | (8k, k) | (16k, k) | (0, k) |
|---|---|---|---|---|---|---|---|---|---|---|---|---|---|---|---|---|
| Intra mode | 2 or 66 | 63 | 59 | 58 | 56 | 55 | 54 | 52 | 5 | 9 | 10 | 12 | 13 | 14 | 16 | 50 |
| (x, y) | (-k, k) | (-3k, 4k) | (-k, 2k) | (-3k, 8k) | (-k, 4k) | (-3k, 16k) | (-k, 8k) | (-k, 16k) | (-4k, 3k) | (-2k, k) | (-8k, 3k) | (-4k, k) | (-16k, 3k) | (-8k, k) | (-16k, k) | (k, 0) |
| Intra mode | 34 | 37 | 41 | 42 | 44 | 45 | 46 | 48 | 31 | 27 | 26 | 24 | 23 | 22 | 20 | 18 |

**19**

According to an embodiment of the present disclosure, information about whether partition shape refinement is performed may be signaled. For example, whether partition shape refinement is performed may be signaled in the form of a flag having a value of 0 ("false") or 1 ("true"). The flag may be positioned in front of or behind geoBlending_idx[x0][y0] of FIG. 15, in front of or behind TMMergeFlag[x0][y0], in front of or behind merge_gpm_partition_idx[x0][y0], or behind merge_gpm_idx1[x0][y0], that is, at the end.

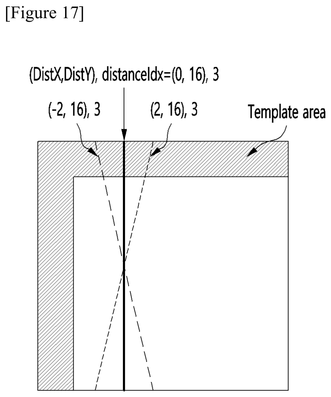

FIG. 17 is an exemplary diagram illustrating partition shape refinement according to the present disclosure.

In the example of FIG. 17, (DistX, DistY) is (0, 16), distanceIdx is 3, and (CandDistX, CandDistY) is (-2,16) and (2, 16). As shown in FIG. 17, only a partition direction may be refined, and a distance may not be refined. In this case, template costs for partition directions (-2,16), (0, 16), and (2, 16) may be calculated, and a partition shape may be refined to have a partition direction with the lowest template cost.

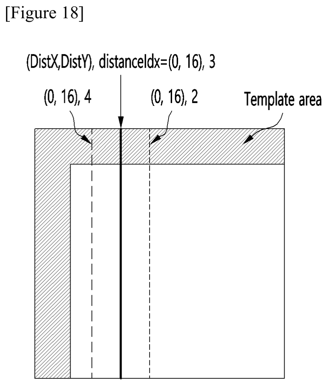

FIG. 18 is another exemplary diagram illustrating partition shape refinement according to the present disclosure.

In the example of FIG. 18, (DistX, DistY) is (0, 16), distanceIdx is 3, and CandDistanceIdx is 2 and 4. As shown in FIG. 18, a partition direction is not refined, and only a distance may be refined. In this case, template costs for the distance indexes 2, 3, and 4 may be calculated, and a partition shape may be refined to have a distance with the lowest template cost.

A template cost of a template area may be calculated without a blending area. For example, a template cost may be calculated using Expression 3 below. Here, when a weight is set to 0 or 1, the template cost may be calculated without performing blending.

[Expression 3]

$$\text{Template cost} = \sum(\text{weight}*\text{src0}+(1-\text{weight})*\text{src1}-\text{CurTemplateSamples})$$

Alternatively, in the case of calculating a template cost of a template area, a weight having a range from 0 to 2n (n is a real number) may be used. For example, a template cost may be calculated using Expression 4 below.

[Expression 4]

$$\text{Template cost} = \sum(\text{weight}*\text{src0}+(2n-\text{weight})*\text{src1}-\text{CurTemplateSamples})>>n$$

In Expressions 3 and 4 above, src0 may be a predictor of the first partition. In the case of generating src0 using an inter prediction mode, a reference block in a reference picture may be specified on the basis of motion information which is acquired from a candidate list using merge_gpm_idx0[x0][y0], and src0 may be generated on the basis of an area adjacent to the reference block. In other words, src0 may be generated using a previously constructed sample of a template area adjacent to the reference block. In the case of generating src0 using an IPM, a predictor generated on the basis of one IPM acquired from an IPM list using merge_gpm_idx0[x0][y0] may be src0.

In the case of generating a predictor using an IPM, when an IPM mapped to (DistX, DistY) is p and CandAngleMode mapped to (CandDistX, CandDistY) is q, an IPM acquired from the IPM list may be changed from ipm to ipm+(q-p), and a predictor of a template area may be generated on the basis of the changed ipm.

In Expressions 3 and 4 above, src1 may be a predictor of a template for the second partition. The description of src0 may also apply to src1. However, merge_gpm_idx1[x0][y0] may be used instead of merge_gpm_idx0[x0][y0].

In Expressions 3 and 4 above, CurTemplateSamples may be a current template constructed using previously constructed samples of a template area adjacent to a current block.

Each of Expressions 3 and 4 above may be an example of calculating a template cost and may equally or similarly apply to other embodiments of the present disclosure.

Specific examples of various partition shapes and weights for calculating a template cost will be described below.

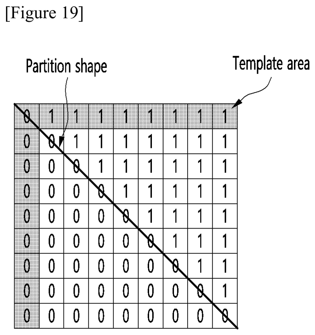

FIG. 19 is a diagram illustrating an example of weights for calculating a template cost.

In FIG. 19, (DistX, DistY) is (-4, 4), distanceIdx is 0, and weights of only 0 and 1 may be used. In this case, weights applied to a template area to calculate a template cost are as shown in FIG. 19.

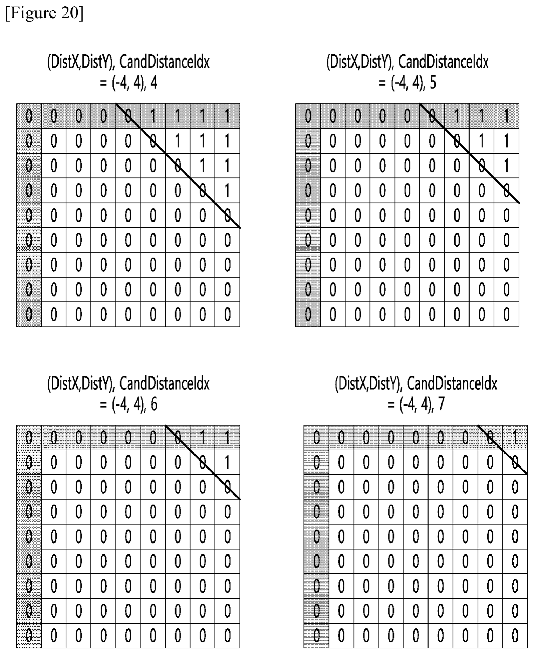

FIG. 20 is a set of diagrams illustrating another example of weights for calculating a template cost.

In FIG. 20, (DistX, DistY) is (-4, 4), CandDistanceIdx is 4, 5, 6, and 7, and weights of only 0 and 1 may be used. In this case, weights applied to a template area to calculate a template cost are as shown in FIG. 20.

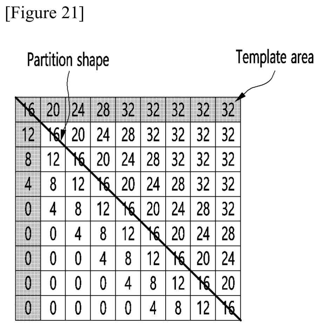

FIG. 21 is a diagram illustrating still another example of weights for calculating a template cost.

In FIG. 21, (DistX, DistY) is (-4, 4), distanceIdx is 0, and weights of 0 to 32 may be used. In this case, weights applied to a template area to calculate a template cost are as shown in FIG. 21.

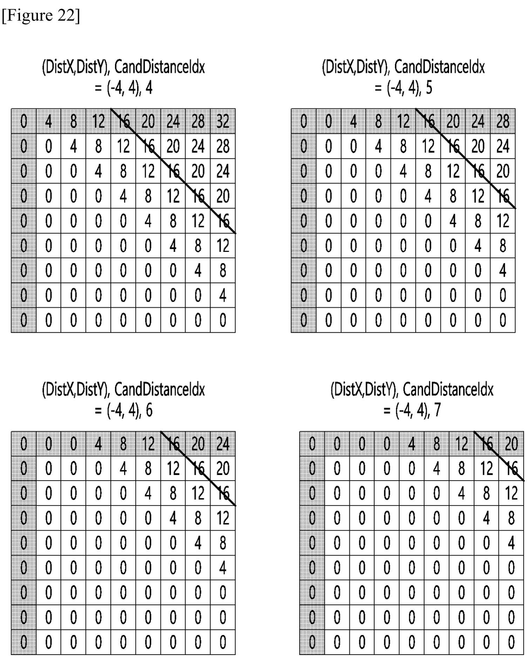

FIG. 22 is a set of diagrams illustrating yet another example of weights for calculating a template cost.

In FIG. 22, (DistX, DistY) is (-4, 4), CandDistanceIdx is 4, 5, 6, and 7, and weights of only 0 to 32 may be used. In this case, weights applied to a template area to calculate a template cost are as shown in FIG. 22.

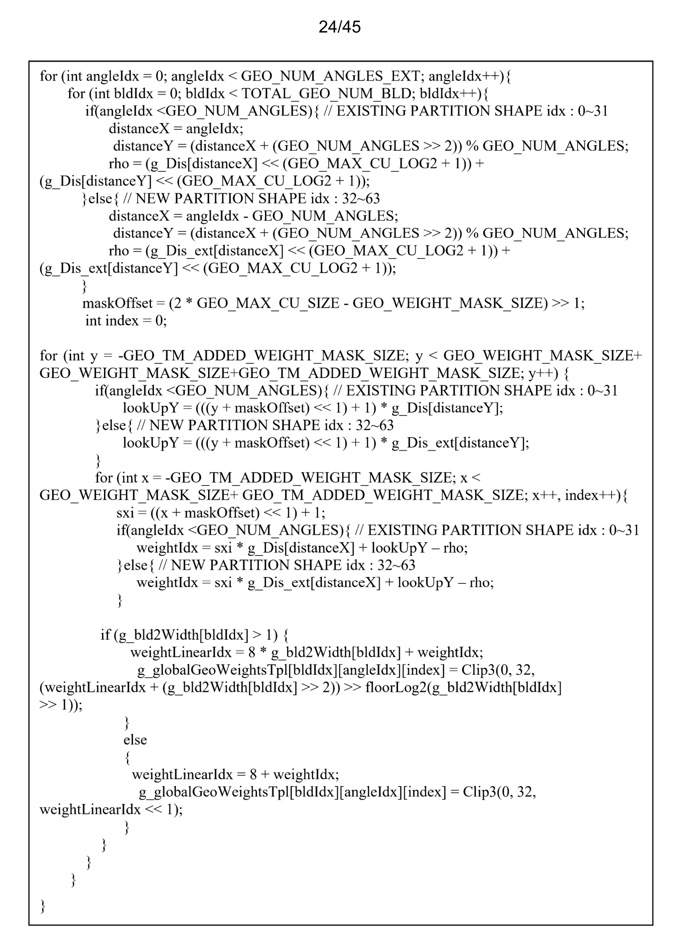

FIG. 23 shows an example of generating a weight map according to the present disclosure.

Weights of 0 to 32 for a weight map g_globalGeoWeightsTpl with a size of GEO_WEIGHT_MASK_SIZE_EXT*-GEO_WEIGHT_MASK_SIZE_EXT may be generated using the method illustrated in FIG. 23. When there are P types of blending areas and Q partition shapes, P*Q weight maps may be generated, or less than P*Q weight maps may be partially generated (P and Q are real numbers).

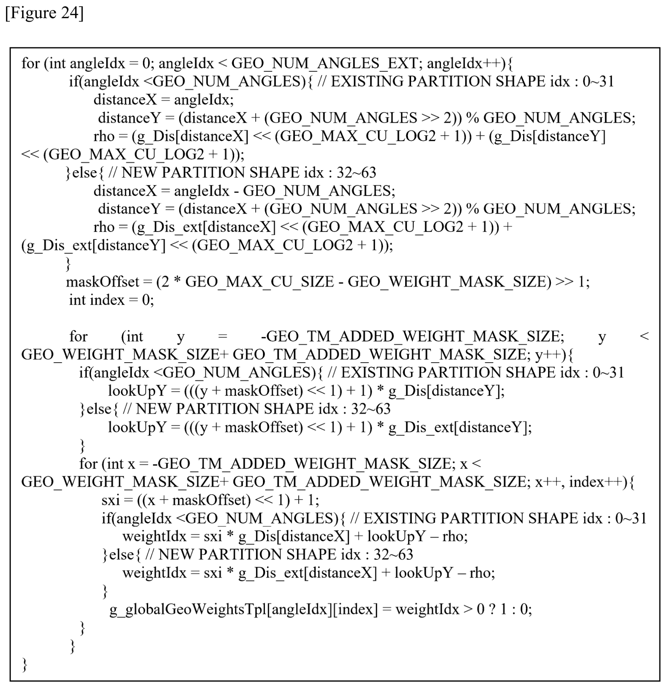

FIG. 24 shows another example of generating a weight map according to the present disclosure.

Weights of only 0 and 1 for a weight map g_globalGeoWeightsTpl with a size of GEO_WEIGHT_MASK_SIZE_EXT*GEO_WEIGHT_MASK_SIZE_EXT may be generated using the method illustrated in FIG. 24. When there are Q partition shapes, Q weight maps may be generated, or less than Q weight maps may be partially generated (Q is a real number).

The content illustrated in FIGS. 23 and 24 will be described in detail below.

GEO_NUM_ANGLES is the number of existing partition shapes. For example, GEO_NUM_ANGLES may be 32.

GEO_NUM_ANGLES_EXT is the total number of partition shapes including new partition shapes that are added for partition shape refinement. For example, GEO_NUM_ANGLES_EXT may be 64 which is calculated by adding 32, the number of new partition shapes, to GEO_NUM_ANGLES.

TOTAL_GEO_NUM_BLD is the number of types of blending areas. For example, TOTAL_GEO_NUM_BLD may be 6.

g_Dis[GEO_NUM_ANGLES] is {8, 8, 8, 8, 4, 4, 2, 1, 0, -1, -2, -4, -4, -8, -8, -8, -8, -8, -8, -8, -4, -4, -2, -1, 0, 1, 2, 4, 4, 8, 8, 8}. The g_Dis list may be a list for mapping angleIdx information to a partition direction. For example, as shown in Table 2 above, angleIdx may be previously defined, and each value may represent a partition direction. A partition direction that angleIdx represents may be mapped to be expressed as a partition direction (x, y) as shown in FIG. 16.

g_Dis_ext[GEO_NUM_ANGLES] is {16, 16, 16, 16, 8, 8, 4, 1, -1, -3, -6, -12, -12, -24, -24, -16, -16, -16, -16, -16, -8, -8, -4, -1, 1, 3, 6, 12, 12, 24, 24, 16}. The g_Dis_ext list may be a list for mapping angleIdx information to a partition direction. For example, as shown in Table 2 above, angleIdx may be previously defined, and each value may represent a partition direction. A partition direction that angleIdx represents may be mapped to be expressed as a partition direction x and y as shown in FIG. 16.

Specifically, in the example shown in FIG. 24, the g_Dis list enables existing partition shape idx information to be mapped to a corresponding partition direction. The g_Dis_ext list enables new (added) partition shape idx information to be mapped to a corresponding partition direction.

g_bld2Width[TOTAL_GEO_NUM_BLD] is {1, 2, 4, 8, 16, 32}. The g_bld2Width list may indicate a range of a blending area. For example, with an increase in the value, the range of a blending area may widen to generate a weight map.

GEO_MAX_CU_LOG2 is 6. GEO_MAX_CU_LOG2 is a size of the largest CU on logarithmic scale. For example, when the size of the largest CU is 64 (pel), GEO_MAX_CU_LOG2 may be 6.

GEO_MAX_CU_SIZE is a size of the largest CU in sample units and may be calculated as 1<<GEO_MAX_CU_LOG2.

GEO_WEIGHT_MASK_SIZE is a size of a weight map and may be calculated as, for example, (GEO_WEIGHT_MASK_SIZE>>3)*2+ GEO_WEIGHT_MASK_SIZE.

GEO_WEIGHT_MASK_SIZE_EXT is a size of a weight map in which TM is taken into consideration when TM is utilized, and may be calculated as GEO_WEIGHT_MASK_SIZE+GEO_TM_ADDED_WEIGHT_MASK_SIZE*2.

GEO_TM_ADDED_WEIGHT_MASK_SIZE is a size of a template area and may be, for example, 1.

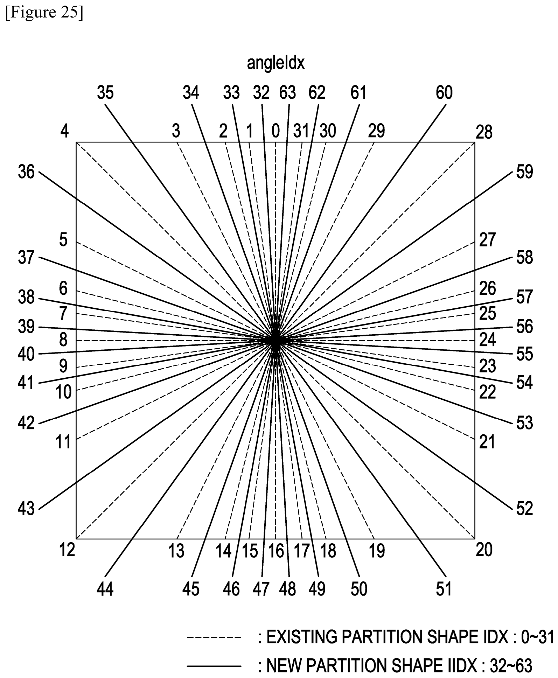

FIG. 25 is a diagram illustrating partition shapes of a GPM including new partition shapes.

As shown in FIG. 25, there are 32 existing partition shapes which are indicated by broken lines, and indexes may be 0 to 31. In addition, there are 32 new partition shapes which are indicated by solid lines, and indexes may be 32 to 63. The above-described weight map generation method may be used to generate a weight map for the 64 partition shapes shown in FIG. 25.

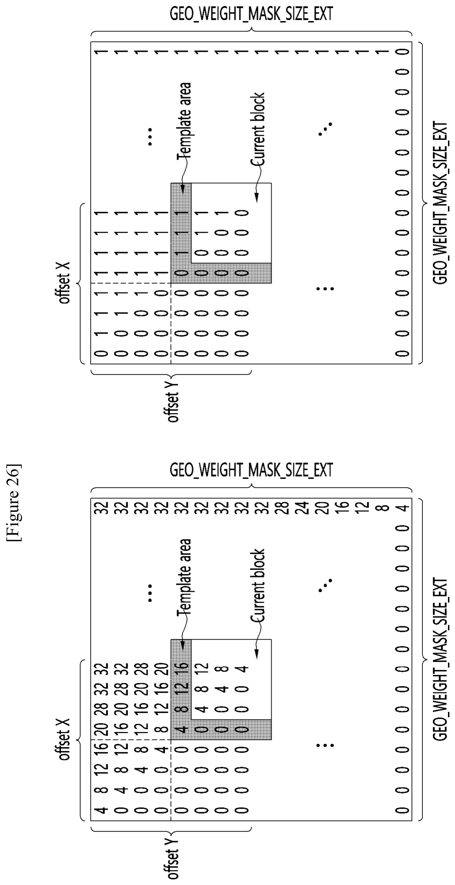

FIG. 26 is a set of diagrams illustrating a weight acquisition process in detail.

A process of acquiring a weight for a partition shape corresponding to, for example, partition shape idx 4 of FIG. 25 will be described with reference to FIG. 26. In the left diagram of FIG. 26, a weight map having weights of 0 to 32 and a size of GEO_WEIGHT_MASK_SIZE_EXT*GEO_WEIGHT_MASK_SIZE_EXT is used. In the right diagram of FIG. 26, a weight map having weights of 0 or 1 and a size of GEO_WEIGHT_MASK_SIZE_EXT*GEO_WEIGHT_MASK_SIZE_EXT is used.

In FIG. 26, weights for a current block and an adjacent template area may be acquired by applying offset and offset to a weight map g_globalGeoWeightsTpl with a size of GEO_WEIGHT_MASK_SIZE_EXT*-GEO_WEIGHT_MASK_SIZE_EXT.

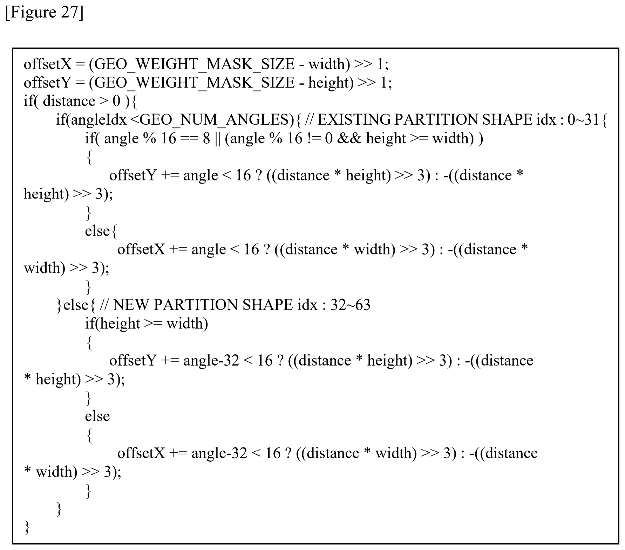

FIG. 27 illustrates an example of acquiring offset X and an offset of FIG. 26.

In FIG. 27, "height" is a height of the current block, and "width" is a width of the current block. In addition, "angle" is angleIdx, and "distance" is distanceIdx or CandDistanceIdx.

GEO_WEIGHT_MASK_SIZE is a size of a weight map and may be calculated as, for example, 3* (GEO_MAX_CU_SIZE>>3)*2+ GEO_MAX_CU_SIZE. Here, the maximum CU size GEO_MAX_CU_SIZE may be calculated as 1<<GEO_MAX_CU_LOG2, and GEO_MAX_CU_LOG2 may be 6. As described above, GEO_MAX_CU_LOG2 is a size of the largest CU on a logarithmic scale.

As an example, a motion vector required for acquiring a template position of a reference picture may be a motion vector acquired in operation S1420 or a refined motion vector acquired in operation S1430.

According to the present embodiment, prediction performance of a GPM can be improved by refining at least one of a partition direction or distance of the GPM on the basis of TM.

Embodiment 2

According to the present disclosure, a blending area may be refined on the basis of TM.

For example, according to the present embodiment, a blending area may be refined in operation S1450 of FIG. 14 to efficiently blend two predictors, which can improve prediction performance of a GPM.

A size of a blending area and a signaling method thereof will be described with reference to Table 7.

[Table 7]

| Blending area | $1/4\tau$ | $1/2\tau$ | $1\tau$ | $2\tau$ | $4\tau$ |
|---|---|---|---|---|---|
| bin | 011 | 010 | 1 | 001 | 000 |
| geoBlending_idx | 0 | 1 | 2 | 3 | 4 |

In Table 7, a size of a blending area may adaptively change. In addition, a blending area may be signaled using an index geoBlending_idx, and some blending areas may be implicitly derived. In Table 7, a size of a blending area may be expressed using $\tau$. $1\tau$ may be a reference size.

According to the present disclosure, a template cost between a template of a reference picture and a template adjacent to a current block may be calculated for blending area candidates, and a blending area may be refined using a blending area candidate with the lowest template cost.

Here, when a template cost of a blending area of the current block is lower than or equal to template costs of the blending area candidates, the blending area may not be refined. Alternatively, when the template cost for the blending area of the current block is lower than a specific threshold, the blending area may not be refined. For example, the specific threshold may be the number of pixels in a template area. Alternatively, the specific threshold may be a size (width*height) of the current block.

Blending area refinement according to the present embodiment may be performed simultaneously with the partition shape refinement of embodiment 1. Alternatively, blending area refinement may be performed before or after partition area refinement. Alternatively, only blending area refinement may be performed.

As an example, a blending area candidate CandBlendArea may be an area adjacent to a current blending area BlendArea. Here, the current blending area may be explicitly signaled or implicitly derived.

For example, CandBlendArea may be a value satisfying the following range.

$$\text{BlendArea} - \alpha \le \text{CandBlendArea} \le \text{BlendArea} + \beta \ (\alpha \text{ and } \beta \text{ are real numbers})$$

In addition, CandBlendArea may be determined on the basis of BlendArea. For example, when BlendArea is $4\tau$, $\alpha$ and $\beta$ may be $1\tau$. In this case, CandBlendArea may be, for example, $3\tau$ or $5\tau$. In addition, when BlendArea is $1\tau$, $\alpha$ and $\beta$ may be smaller than or equal to $\tau/2$. In this case, CandBlendArea may be, for example, $3\tau/4$, $4\tau/5$, $1.5\tau$ or the like.

For example, when the current blending area is $1\tau$, CandBlendArea may be constructed as follows.

CandBlendArea may be $3\tau/4$, $5\tau/4$, and $3\tau/2$.

However, candidates that are identical to the blending areas of Table 7 may be excluded.

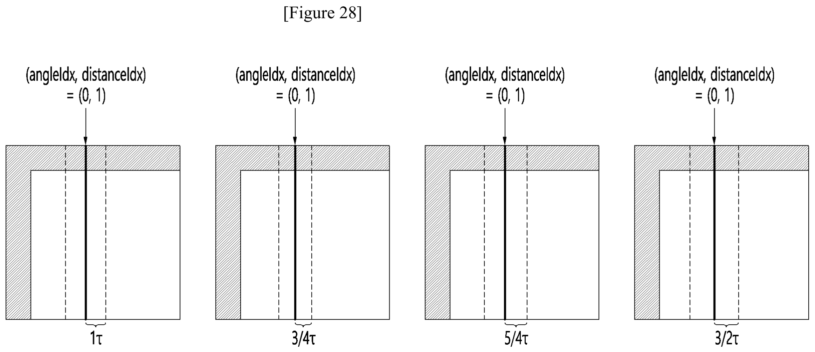

FIG. 28 is a set of diagrams illustrating blending area candidates.

In FIG. 28, currently signaled merge_gpm_partition_idx may be 0, that is, (angleIdx, distanceIdx)=(0, 1), and a blending area may be $1\tau$. In addition, the examples shown in FIG. 28 show the cases where CandBlendArea is $3\tau/4$, $5\tau/4$, and $3\tau/2$. Template costs may be calculated for the current blending area and the blending area candidates shown in FIG. 28, and the current blending area may be refined into a blending area with the lowest template cost among the blending area candidates.

For example, a motion vector required for acquiring a template position of the reference picture may be a motion vector acquired in operation S1420 or a refined motion vector acquired in operation S1430.

According to the present embodiment, information about whether blending area refinement is performed may be signaled. For example, whether blending area refinement is performed may be signaled in the form of a flag having a value of 0 ("false") or 1 ("true"). The flag may be positioned in front of or behind geoBlending_idx[x0][y0] of FIG. 15, in front of or behind TMMergeFlag[x0][y0], in front of or behind merge_gpm_partition_idx[x0][y0], or behind merge_gpm_idx1[x0][y0], that is, at the end.

According to an embodiment, a template cost of a template area may be calculated in consideration of a blending area. In the case of calculating a template cost of a template area, a weight having a range from 0 to 2k (k is a real number) may be used. For example, a template cost may be calculated using Expression 5 below.

[Expression 5]

$$\text{Template cost} = \sum(\text{weight*src0} + (2k - \text{weight})*\text{src1} - \text{CurTemplateSamples}) >> k$$

In Expression 5 above, src0 may be a predictor of the first partition. In the case of generating src0 using an inter prediction mode, a reference block in the reference picture may be specified on the basis of motion information which is acquired from a candidate list using merge_gpm_idx0[x0][y0], and src0 may be generated on the basis of an area adjacent to the reference block. In other words, src0 may be generated using a previously constructed sample of a template area adjacent to the reference block. In the case of generating src0 using an IPM, a predictor generated on the basis of one IPM acquired from an IPM list using merge_gpm_idx0[x0][y0] may be src0.

A predictor may be generated using an IPM, which may be performed together with partition shape refinement of embodiment 1. For example, in the case of calculating a template cost using a combination of (CandDistX, CandDistY) and CandBlendArea, when an IPM mapped to (DistX, DistY) is p and CandAngleMode mapped to (CandDistX, CandDistY) is q, an IPM acquired from the IPM list may be changed from ipm to ipm+(q-p), and a predictor of a template area may be generated on the basis of the changed ipm.

In Expression 5 above, src1 may be a predictor of a template for the second partition. The description of src0 may also apply to src1. However, merge_gpm_idx1[x0][y0] may be used instead of merge_gpm_idx0[x0][y0].

In Expression 5 above, CurTemplateSamples may be a current template constructed using previously constructed samples of a template area adjacent to a current block.

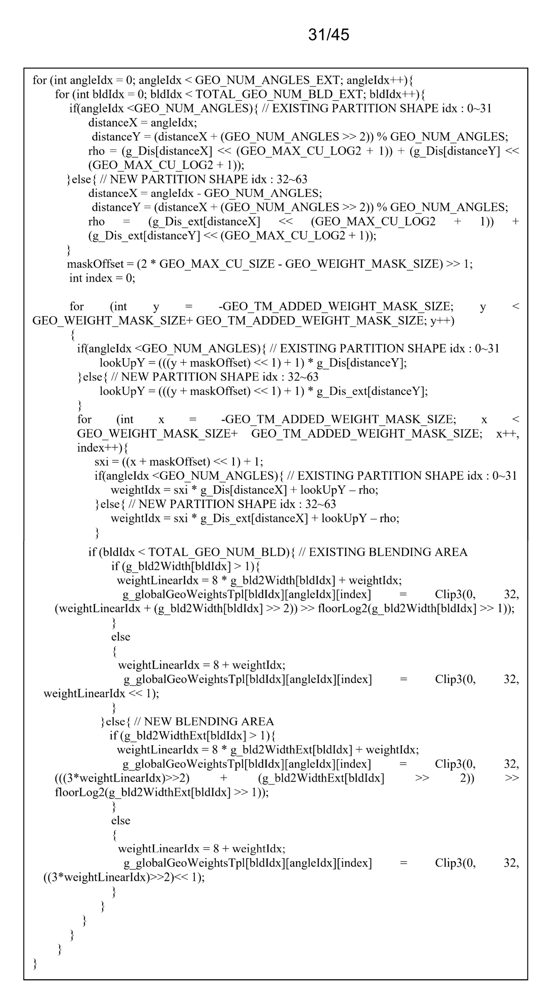

FIG. 29 illustrates an example of generating a weight map according to embodiment 2 of the present disclosure.

Weights of 0 to 32 for a weight map g_globalGeoWeightsTpl with a size of GEO_WEIGHT_MASK_SIZE_EXT*-GEO_WEIGHT_MASK_SIZE_EXT may be generated using the method illustrated in FIG. 29. When there are P types of blending areas and Q partition shapes, P*Q weight maps may be generated, or less than P*Q weight maps may be partially generated (P and Q are real numbers).

When terms of FIG. 29 are identical to terms of FIGS. 23 and 24, description of the terms of FIGS. 23 and 24 may also apply to the terms of FIG. 29.

In FIG. 29, TOTAL_GEO_NUM_BLD_EXT is the total number of blending areas including existing blending areas and new blending areas. For example, when the number of existing blending areas is 6 and the number of new blending areas is 6, TOTAL_GEO_NUM_BLD_EXT may be 12.

g_bld2WidthExt[TOTAL_GEO_NDM_BLD_EXT] may be {1, 2, 4, 8, 16, 32, 1, 2, 4, 8, 16, 32}. The g_bld2WidthExt list may be a list for specifying ranges of various blending areas. For example, the g_bld2WidthExt list may specify ranges of blending areas corresponding to the following cases (1) to (12). With an increase in a value of g_bld2WidthExt, a range of a blending area may widen to generate a weight map.

GEO_MAX_CU_LOG2 is 6. GEO_MAX_CU_LOG2 is a size of the largest CU on a logarithmic scale. For example, when the size of the largest CU is 64 (pel), GEO_MAX_CU_LOG2 may be 6.

GEO_TM_ADDED_WEIGHT_MASK_SIZE is a size of a template area and may be, for example, 1.

In the case of generating a weight map in accordance with FIG. 29, an expression for generating a weight map for each blending area may be as follows.

In the case where a blending area is $\tau/4$,

$$\text{Int weightLinearIdx} = 8*1 + \text{weightIdx};$$

g_globalGeoWeightsTpl[bldIdx][angleIdx][index] = Clip3(0, 32, weightLinearIdx << 1);

(2) In the case where a blending area is $3\tau/8$,

$$\text{Int weightLinearIdx} = 8*1 + \text{weightIdx};$$

g_globalGeoWeightsTpl[bldIdx][angleIdx][index] = Clip3(0, 32, (((weightLinearIdx*3) >> 2) << 1);

(3) In the case where a blending area is $\tau/2$,

$$\text{Int weightLinearIdx} = 8*2 + \text{weightIdx};$$

g_globalGeoWeightsTpl[bldIdx][angleIdx][index] = Clip3(0, 32, (weightLinearIdx + (2 >>2)) >> floorLog2(2 >> 1);

(4) In the case where a blending area is $3\tau/4$,

$$\text{Int weightLinearIdx} = 8*2 + \text{weightIdx};$$

g_globalGeoWeightsTpl[bldIdx][angleIdx][index] = Clip3(0, 32, (((weightLinearIdx*3) >> 2) + (2 >> 2)) >> floorLog2(2 >> 1));

(5) In the case where a blending area is $1\tau$,

$$\text{Int weightLinearIdx} = 8*4 + \text{weightIdx};$$

g_globalGeoWeightsTpl[bldIdx][angleIdx][index] = Clip3(0, 32, (weightLinearIdx + (4 >> 2)) >> floorLog2(4 >> 1));

(6) In the case where a blending area is $3\tau/2$,

$$\text{Int weightLinearIdx} = 8*4 + \text{weightIdx};$$

g_globalGeoWeightsTpl[bldIdx][angleIdx][index] = Clip3(0, 32, (((weightLinearIdx*3) >> 2) + (4 >> 2)) >> floorLog2(4 >> 1);

(7) In the case where a blending area is $2\tau$,

$$\text{Int weightLinearIdx} = 8*8 + \text{weightIdx};$$

g_globalGeoWeightsTpl[bldIdx][angleIdx][index] = Clip3(0, 32, (weightLinearIdx + (8 >> 2)) >> floorLog2(8 >> 1);

(8) In the case where a blending area is $3\tau$,

$$\text{Int weightLinearIdx} = 8*8 + \text{weightIdx};$$

g_globalGeoWeightsTpl[bldIdx][angleIdx][index] = Clip3(0, 32, (((weightLinearIdx*3) >> 2) + (8 >> 2)) >> floor-Log2(8 >> 1));

(9) In the case where a blending area is $4\tau$,

$$\text{Int weightLinearIdx} = 8*16 + \text{weightIdx};$$

g_globalGeoWeightsTpl[bldIdx][angleIdx][index] = Clip3(0, 32, (weightLinearIdx + (16 >> 2)) >> floorLog2(16 >> 1);

(10) In the case where a blending area is $6\tau$,

$$\text{Int weightLinearIdx} = 8*16 + \text{weightIdx};$$

g_globalGeoWeightsTpl[bldIdx][angleIdx][index] = Clip3(0, 32, (((weightLinearIdx*3) >> 2) + (16 >> 2)) >> floor-Log2(16 >> 1));

(11) In the case where a blending area is $8\tau$,

$$\text{Int weightLinearIdx} = 8*32 + \text{weightIdx};$$

g_globalGeoWeightsTpl[bldIdx][angleIdx][index] = Clip3(0, 32, (weightLinearIdx + (32 >> 2) >> floorLog2(32 >> 1);

(12) In the case where a blending area is $12\tau$,

$$\text{Int weightLinearIdx} = 8*32 + \text{weightIdx};$$

g_globalGeoWeightsTpl[bldIdx][angleIdx][index] = Clip3(0, 32, (((weightLinearIdx*3) >> 2) + (32 >> 2)) >> floor-Log2(32 >> 1));

The weight acquisition process for a GPM of a current block that has been described with reference to FIGS. 26 and 27 may also apply to embodiment 2.

According to the present embodiment, prediction performance of a GPM can be improved by refining a blending area of the GPM on the basis of TM.

Embodiment 3

According to the present embodiment, in operation S1440 of FIG. 14, the blending area candidates ($\tau/4$, $\tau/2$, $1\tau$, $2\tau$, and $4\tau$) of Table 7 may be reordered on the basis of TM.

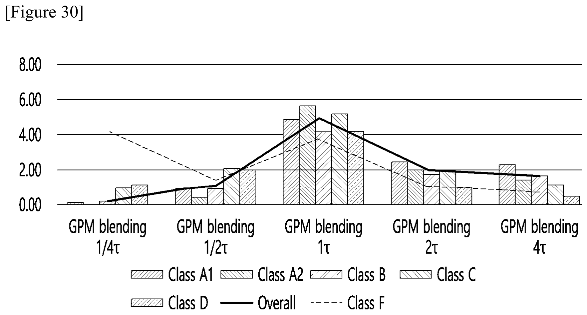

FIG. 30 is a diagram showing selection rates of blending area candidates.

As shown in FIG. 30, different classes of sequences have different selection rates for a blending area. For example, a class F sequence has the highest selection rate for $\tau/4$ unlike other classes. This represents that signaling a fixed blending area is ineffective. Therefore, blending areas can be effectively signaled by reordering blending area candidates on the basis of TM.

According to the present disclosure, a template cost between a template of a reference picture and a template adjacent to a current block may be calculated for blending area candidates which are predefined as shown in Table 7, and a list of the blending area candidates may be reordered in ascending order of template cost.

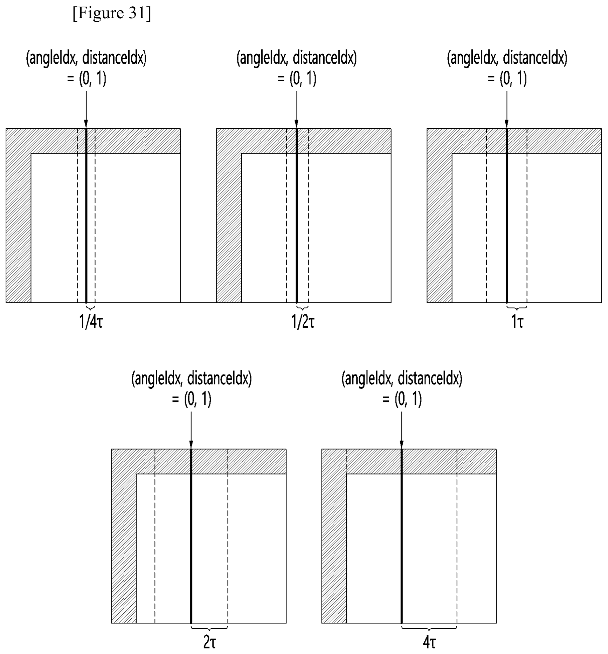

FIG. 31 is a set of diagrams illustrating blending area candidates.

Template cost calculation in the present embodiment may be performed using Expression 5 above. Also, the description of Expression 5 of embodiment 2 may also apply to the present embodiment.

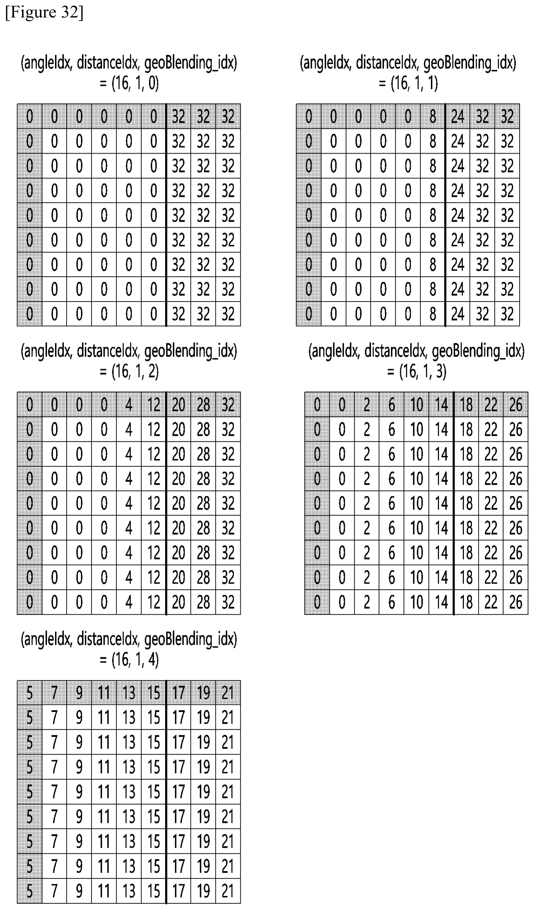

FIG. 32 is a set of diagrams illustrating various examples of weights for calculating a template cost according to the present embodiment.

In FIG. 32, (angleIdx distanceIdx) is (16, 1), and weights of 0 to 32 may be used. In this case, templates costs of the blending area candidates of Table 7 may be calculated. In this case, weights applied to a template area to calculate a template cost are as shown in FIG. 32.

According to the above description, the template costs of the blending area candidates may be calculated, and then the blending area candidates may be rearranged in ascending order. Subsequently, for example, a blending area with the lowest template cost is binarized into 1 bit, and other blending areas are binarized into 3 bits such that the number of bits required for signaling a blending area can be reduced. For example, a bin of the blending area with the lowest template cost may be generated as 1, and bins of the other 4 blending areas may be generated as 010, 011, 001, and 000. Alternatively, the bin of the blending area with the lowest template cost may be generated as 0, and the bins of the other 4 blending areas may be generated as 101, 100, 110, and 111.

Alternatively, the binarization process of Table 8 and/or Table 9 below may be performed.

[Table 8]

```
k-th order Exp-Golomb binarization
Inputs to this process is a request for a k-th order Exp-Golomb (EGk) binarization.
Output of this process is the EGk binarization associating each value symbolVal with a
corresponding bin string.
The bin string of the EGk binarization process for each value symbolVal is specified as follows,
where each call of the function put( X ), with X being equal to 0 or 1, adds the binary value X at
the end of the bin string:

        absV = Abs( symbolVal )
        stopLoop = 0
        do
              if( absV   >=   ( 1   <<   k ) ) {
                    put( 1 )
                    absV = absV − ( 1   <<   k )
                    k++
              } else {
                    put( 0 )
                    while( k− − )
                          put( ( absV   >>   k ) &
1 )
                    stopLoop = 1
              }
        while( !stopLoop )
```

[Table 9]

**Limited k-th order Exp-Golomb binarization**

Inputs to this process is a request for a limited k-th order Exp-Golomb (EGk) binarization, the order k, the variables maxPreExtLen and truncSuffixLen.

Output of this process is the limited EGk binarization associating each value symbolVal with a corresponding bin string.

The bin string of the limited EGk binarization process for each value symbolVal is specified as follows, where each call of the function put( X ), with X being equal to 0 or 1, adds the binary value X at the end of the bin string:

```
codeValue = symbolVal   >>   k
preExtLen = 0
while( ( preExtLen < maxPreExtLen )   &&   ( codeValue > ( ( 2   <<
preExtLen ) - 2 ) ) ) {
        preExtLen++
        put( 1 )
}
if( preExtLen  = =   maxPreExtLen )
        escapeLength = truncSuffixLen
else {
        escapeLength = preExtLen + k
        put( 0 )
}
symbolVal = symbolVal - ( ( ( 1   <<   preExtLen ) - 1 )   <<   k )
while( ( escapeLength- - ) > 0 )
        put( ( symbolVal   >>   escapeLength ) & 1 )
```

According to the present embodiment, the number of bits required for signaling a blending area can be reduced by assigning fewer bits to a blending area with the lowest template cost to encode the blending area.

Embodiment 4

According to the present disclosure, TM-based partition shape refinement and/or blending area refinement may be performed in an SGPM.

According to a conventional SGPM, only 26 of 64 partition shapes used in GPM-inter are of limited use in consideration of complexity. In addition, a blending area is implicitly derived on the basis of a block size without signaling. In other words, an SGPM only uses very limited partition shapes and blending areas. According to the present embodiment, performance of an SGPM can be improved by refining an SGPM partition shape and/or blending area on the basis of TM.

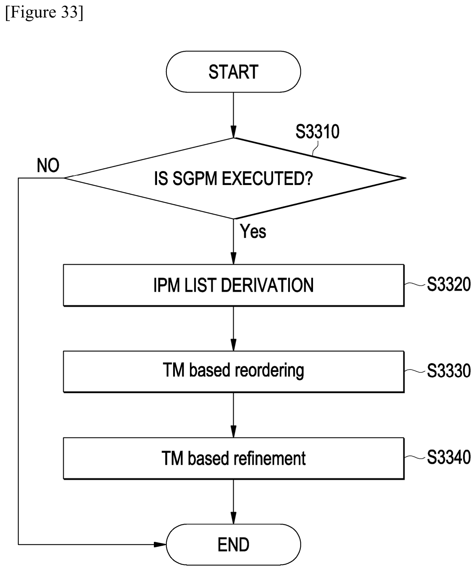

FIG. 33 is a flowchart illustrating an improvement in a TM-based SGPM according to the present disclosure.

In FIG. 33, it may be determined whether an SGPM is executed on a current block (S3310). The determination of operation S3310 may be performed on the basis of an SGPM flag that indicates whether an SGPM is executed.

When it is determined in operation S3310 that an SGPM is not executed, SGPM-related follow-up operations may not be performed.

When it is determined in operation S3310 that an SGPM is executed, an IPM list required for executing the SGPM may be derived (S3320). The IPM list may be generated as follows.

In connection with each partition mode, an IPM list may be derived for each geometric partition. An IPM list may have a size of 3. An IPM list derivation method may be the same as that used in a GPM intra/inter mode. However, TIMD modes may be excluded, which may be the only difference.

In addition, TIMD modes (modes derived from a horizontal template and modes derived from a vertical template) may be added to an IPM list and placed at uppermost positions. A size of an IPM list may be maintained at 3.

Subsequently, TM-based reordering may be performed (S3330).

Specifically, possible combinations of one partition mode and two IPMs may be arranged in ascending order on the basis of SADs between a prediction block and reconstructed samples. A length of the candidate list of combinations may be set to 16. Subsequently, one combination candidate may be selected from the candidate list on the basis of an index sgpm_cand_idx indicating one of the arranged candidates. A partition shape and two IPMs may be derived on the basis of the selected combination candidate.

In addition, in operation S3340, TM-based refinement may be performed. Specifically, in operation S3330, sgpm_cand_idx may be signaled to derive a partition shape and two IPMs, and a template cost between a predictor of a template area and a previously constructed sample may be calculated for GPM partition shape candidates. In addition, a partition shape candidate with the lowest template cost is selected such that partition shape refinement may be performed.

Here, when a template cost for a partition shape of a current block is lower than or equal to template costs of the partition shape candidates, the partition shape may not be refined. Alternatively, when the template cost for the partition shape of the current block is lower than a specific threshold, the partition shape may not be refined. For example, the specific threshold may be the number of pixels in a template area. Alternatively, the specific threshold may be a size (width*height) of the current block.

The present embodiment may be the same as embodiment 1 and/or embodiment 2. In addition, a method of calculating a template cost and/or a method of generating a weight map may be the same as that described in embodiment 1 and/or embodiment 2.

According to an embodiment, to perform partition shape refinement, when (CandDistX, CandDistY) is different from (DistX, DistY), an applied IPM may change. For example, when an IPM mapped to (DistX, DistY) is p and an IPM CandAngleMode mapped to (CandDistX, CandDistY) is q, an IPM applied to the first partition may be changed from ipm1 to ipm1+(q-p), and an IPM applied to the second partition may be changed from ipm2 to ipm2+(q-p) (p and q are real numbers). Template costs between a predictor of a template area generated using the changed IPM and previously reconstructed samples of the template area may be calculated, and a partition shape candidate with the lowest template cost may be used for refinement.

When partition shape refinement is applied, TPMs ipm1+(q-p) and ipm2+(q-p) used in a template area for template cost calculation may be used to generate a predictor of a current block.

In addition, IPMs mapped to, for example, (DistX, DistY) or (CandDistX, CandDistY) are shown in Table 10 below (k is a real number).

[Table 10]

| (DistX, DistY) | (0, k) | (16k, k) | (8k, k) | (16k, 3k) | (4k, k) | (8k, 3k) | (2k, k) | (4k, 3k) | (k, 16k) | (k, 8k) | (3k, 16k) | (k, 4k) | (3k, 8k) | (k, 2k) | (3k, 4k) | (k, k) |
|---|---|---|---|---|---|---|---|---|---|---|---|---|---|---|---|---|
| Intra mode | 50 | 16 | 14 | 13 | 12 | 10 | 9 | 5 | 52 | 54 | 55 | 56 | 58 | 59 | 63 | 2 or 66 |
| (DistX, DistY) | (k, 0) | (-16k, k) | (-8k, k) | (-16k, 3k) | (-4k, k) | (-8k, 3k) | (-2k, k) | (-4k, 3k) | (-k, 16k) | (-k, 8k) | (-3k, 16k) | (-k, 4k) | (-3k, 8k) | (-k, 2k) | (-3k, 4k) | (-k, k) |
| Intra mode | 18 | 20 | 22 | 23 | 24 | 26 | 27 | 31 | 48 | 46 | 45 | 44 | 42 | 41 | 37 | 34 |

In Table 10, DistX and DistY may be an x coordinate and a y coordinate for indicating a partition direction, respectively. This is the same as described with reference to FIG. 16.

CandDistX and CandDistY may be an x coordinate and a y coordinate for indicating a partition direction of a partition direction candidate, respectively. Each of CandDistX and CandDistY may be limited to a certain range. For example, CandDistX and CandDistY may have values within the following ranges, and $\alpha$ and $\beta$ may be any real numbers.

$$\mathrm{DistX} - \alpha \leq \mathrm{CandDistX} \leq \mathrm{DistX} + \beta$$

$$\mathrm{DistY} - \alpha \leq \mathrm{CandDistY} \leq \mathrm{DistY} + \beta$$

According to the present embodiment, partition shape refinement and/or blending area refinement may be performed on the basis of TM, which can improve prediction performance of an SGPM.

Embodiment 5

According to the present embodiment, a blending area may be asymmetrically applied.

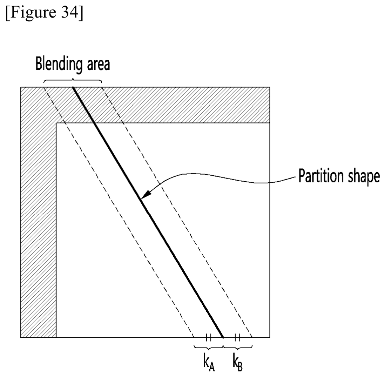

FIG. 34 is a diagram illustrating a symmetric blending area.

As described above, a blending area may be extended from $1\tau$ which is a conventional blending area to $\tau/4$, $\tau/2$, $1\tau$, $2\tau$, or $4\tau$. However, as shown in FIG. 34, a blending area may have a symmetrical shape that has the same size ($k_A = k_B$, $k_A = k_B$ are real numbers) on both sides of a partitioning boundary.

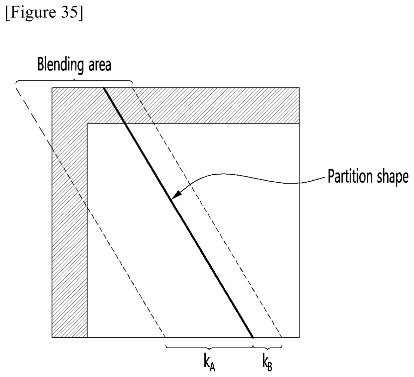

FIG. 35 is a diagram illustrating an asymmetric blending area according to the present disclosure.

As shown in FIG. 35, a blending area may have an asymmetric shape that has different sizes on both sides of a partitioning boundary. In other words, in FIG. 35, $k_A \neq k_B$ may hold. Such an asymmetric blending area may be applied such that improvement of GPM prediction performance can be expected.

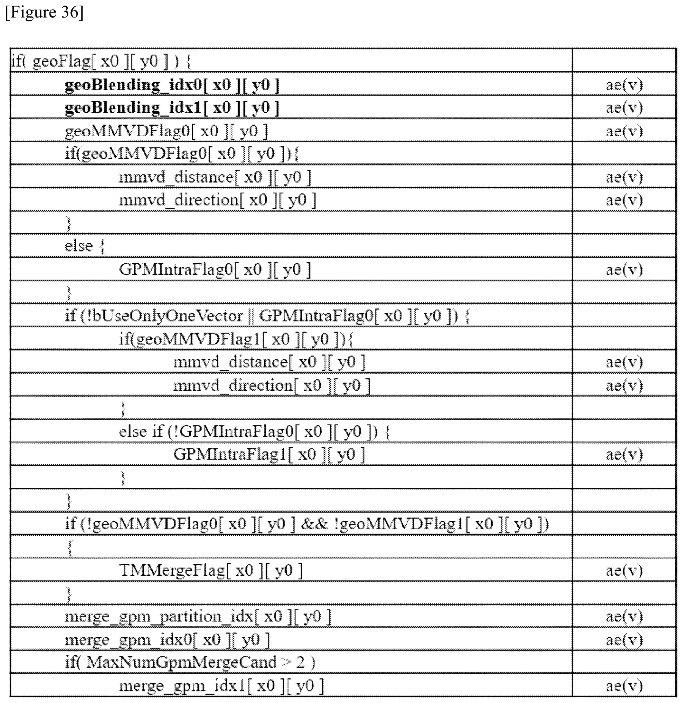

FIG. 36 shows an example of signaling an asymmetric blending area.

As shown in FIG. 36, a blending area of a first partition and a blending area of a second partition of GPM may be signaled using geoBlending_idx0 and geoBlending_idx1, respectively.

In FIGS. 15 and 36, syntax elements with the same name may have the same meaning. Therefore, the description of syntax elements of FIG. 15 may also apply to the same syntax elements of FIG. 36.

In FIG. 36, geoBlending_idx0[x0][y0] may be an index of a blending area of a first partition of a GPM. Also, geoBlending_idx1[x0][y0] may be an index of a blending area of a second partition of the GPM.

In FIG. 36, signaling positions of geoBlending_idx0 and geoBlending_idx1 may change. For example, geoBlending_idx0 and geoBlending_idx1 may be signaled after merge_gpm_partition_idx or merge_gpm_idx.

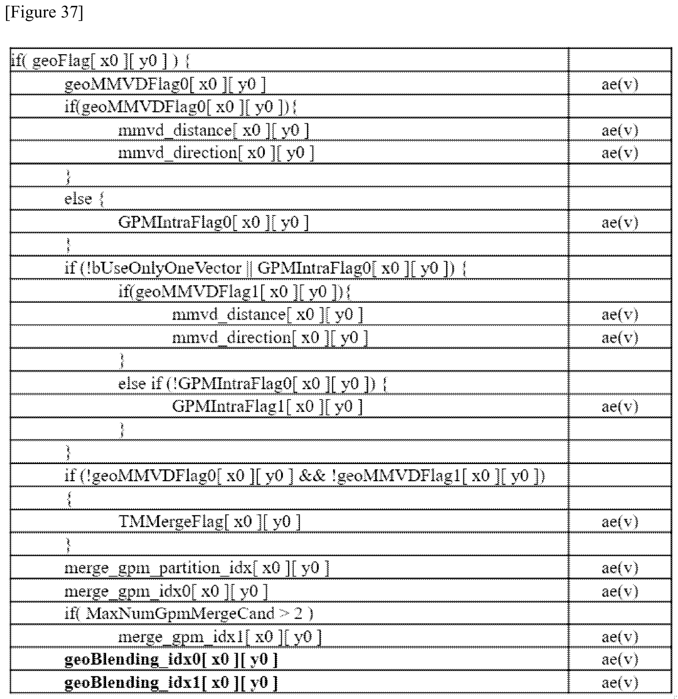

FIG. 37 shows an example in which signaling positions of geoBlending_idx0 and geoBlending_idx1 have changed.

As shown in FIG. 37, geoBlending_idx0 and geoBlending_idx1 may be signaled after merge_gpm_idx0 or merge_gpm_idx1 is signaled.

According to an embodiment, a size of an asymmetric blending area may be signaled using one index. Here, sizes of two blending areas may be derived on the basis of the signaled index and a certain table.

For example, as shown in FIG. 15, when the single syntax geoBlending_idx[x0][y0] is signaled, sizes of blending areas of a first partition (partition 1) and a second partition (partition 2) may be derived in a pair by referring to Table 11 on the basis of a corresponding index. For example, when signaled geoBlending_idx[x0][y0] is 4, the blending area of the first partition may be derived as $1\tau$ and the blending area of the second partition may be derived as $2\tau$.

[Table 11]

| geoBlending_idx [x0][y0] | 0 | 1 | 2 | 3 | 4 | 5 | 6 | 7 |
|---|---|---|---|---|---|---|---|---|
| Partition 1 blending area | $1/4\tau$ | $1/2\tau$ | $1\tau$ | $1\tau$ | $1\tau$ | $2\tau$ | $2\tau$ | $4\tau$ |
| Partition 2 blending area | $1/4\tau$ | $1\tau$ | $1\tau$ | $1/2\tau$ | $2\tau$ | $1\tau$ | $2\tau$ | $4\tau$ |

According to another embodiment of the present disclosure, a size of a blending area allowed under a certain condition may vary. The certain condition may be, for example, size information of a current block, geometric partition shape information merge_gpm_partition_idx of the current block, and the like. For example, when the size of the current block is smaller than a certain threshold, the size of the blending area may be limited. Alternatively, when one partition is smaller than the other partition in accordance with the geometric partition shape information, the size of the blending area may be limited. Alternatively, when the size of the current block is smaller than a certain threshold, the size of the blending area may be limited to one of $\tau/4$, $\tau/2$, $1\tau$, $2\tau$, and $4\tau$ or a value thereof or above. Here, the threshold may be determined on the basis of the size of the current block. For example, the threshold may be determined as a value of 32, 64, 128, or the like on the basis of a product of a width and a height of the current block. Alternatively, the threshold may be determined as a value of 4, 8, 16, 32, or the like on the basis of the width or the height of the current block. Alternatively, when the blending area has a limited value because the condition is satisfied, the blending area may be limited to $\tau/4$, $\tau/2$, and $1\tau$ or $\tau/2$ and $1\tau$.

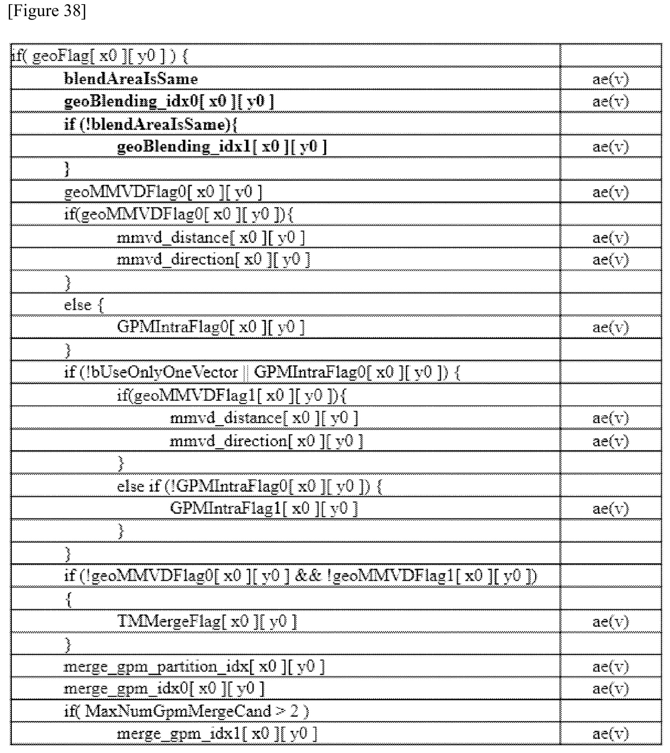

FIG. 38 shows another embodiment of signaling an asymmetric blending area.

Before the above described geoBlending_idx is used to signal blending areas of a first partition and a second partition, information about whether the blending areas of the first partition and the second partition are the same may be signaled. The information about whether the blending areas of the first partition and the second partition are the same may be information in the form of a flag having a value of 0 or 1. When the blending areas of the first partition and the second partition are the same, a flag having a first value (0 or 1) and one index for specifying a size of the blending areas may be signaled. When the blending areas of the first partition and the second partition are different, a flag having a second value (1 or 0) and two indexes for specifying sizes of the blending areas may be signaled. Here, in signaling index information geoBlending_idx1 which is signaled second, a value of index information geoBlending_idx0 which is signaled first may be excluded.

In FIG. 38, blendAreaIsSame may be a flag that has a first value (e.g., "1") when the blending areas of the first partition and the second partition are the same, and has a second value (e.g., "0") otherwise. When blendAreaIsSame is 1, only geoBlending_idx0 may be signaled, and when blendAreaIsSame is 0, both geoBlending_idx0 and geoBlending_idx1 may be signaled. The description of FIG. 15 may also apply to elements of FIG. 38 with the same name.

According to another embodiment of the present disclosure, the blending area of the first partition and the blending area of the second partition may be separately signaled. Here, the information geoBlending_idx0 on the first partition may indicate the blending area of the first partition. Also, the information geoBlending_idx1 on the second partition may be signaled in consideration of whether the blending area of the first partition is the same as the blending area of the second partition.

[Table 12]

| geoBlending_idx0 | Blending area of first partition | geoBlending_idx1 | Blending area of second partition |
|---|---|---|---|
| 0 | $\tau/4$ | 0 | Blending area of first partition |
| 1 | $\tau/2$ | 1 | i |
| 2 | $1\tau$ | 2 | ii |
| 3 | $2\tau$ | 3 | iii |
| 4 | $4\tau$ | 4 | iv |

In Table 12 above, when geoBlending_idx1 is 0, the blending area of the second partition may be derived to be the same as the blending area of the first partition. When geoBlending_idx1 is not 0, the blending area of the second partition may be derived to be one of values other than the blending area of the first partition. In other words, when geoBlending_idx1 is not 0, a blending area identical to the blending area of the first partition may be excluded. For example, blending areas other than the blending area of the first partition may be sequentially added to i, ii, iii, and iv of Table 12 above as candidates for the blending area of the second partition. In addition, geoBlending_idx1 may be binarized to be expressed with the smallest number of bits when geoBlending_idx1 is 0.

According to another embodiment of the present disclosure, size information of a blending area such as geoBlending_flag, geoBlending_idx, or the like may be explicitly signaled, but a blending area of a first partition and a blending area of a second partition may be implicitly derived under a predefined condition without signaling. The predefined condition may be information such as size information of a current block, geometric partition shape information merge_gpm_partition_idx of the current block, and the like.

According to the present disclosure, in the TM-based refinement operation of FIG. 14 or 33, a blending area may be refined on the basis of TM. For example, when a signaled blending area of a current block is $q\tau$, a blending area candidate CandBlendArea1 of a first partition and a blending area candidate CandBlendArea2 of a second partition may be generated as follows. A size of the signaled blending area may be used as a reference size.

CandBlendArea1 may be a neighboring area of $q\tau$ such as $q\tau$, $q\tau+\tau/4$, $q\tau+\tau/2$, $q\tau+1\tau$, $q\tau-\tau/4$, $q\tau-\tau/2$, or $q\tau-1\tau$.

CandBlendArea2 may be a neighboring area of $q\tau$ such as $q\tau$, $q\tau+\tau/4$, $q\tau+\tau/2$, $q\tau+1\tau$, $q\tau-\tau/4$, $q\tau-\tau/2$, or $q\tau-1\tau$.

CandBlendArea1 and CandBlendArea2 may be excluded from blending area candidates in the following cases.

The case where a combination of (CandBlendArea1, CandBlendArea2) corresponds to the blending areas of Table 7.

The case where CandBlendArea1 or CandBlendArea2 is smaller than or equal to 0.

As described above, blending area candidate combinations (CandBlendArea1, CandBlendArea2) are derived, template costs of the candidate combinations are calculated, and a candidate combination with the lowest template cost is selected such that blending area refinement may be performed.

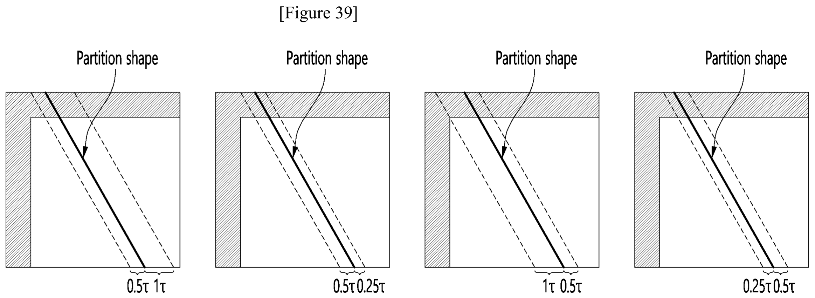

FIG. 39 is a set of diagrams illustrating combinations of blending area candidates for blending area refinement according to the present embodiment.

For example, when a currently signaled blending area is $0.5\tau$, blending area candidate combinations (Cand-BlendArea1, CandBlendArea2) may be $(0.5\tau, 0.5\tau)$, $(0.5\tau, 1\tau,)$, $(0.5\tau, 0.25\tau,)$, $(1\tau, 0.5\tau)$, and $(0.25\tau, 0.5\tau)$. A template cost of the currently signaled blending area and template costs of (CandBlendArea1, CandBlendArea2) candidates are calculated, and a blending area with the lowest one of the template costs is selected such that blending area refinement may be performed.

According to the present embodiment, a blending area including asymmetric partition shapes is refined on the basis of TM, which can improve prediction performance of a GPM.

Embodiment 6

According to an embodiment of the present disclosure, a method of effectively generating an IPM list in the case of coding a partition of a GPM using an IPM may be provided.

An IPM list may be generated to code a partition of a GPM using an IPM. To construct candidates of the IPM list, the above-described DIMD and/or TIMD may be used. However, DIMD or TIMD modes are not effectively used as candidates of the IPM list.

According to the present disclosure, IPMs are derived in consideration of a partition shape of a GPM such that an effective IPM list can be made. Accordingly, performance of the GPM can be improved.

When a partition is coded using an IPM in conventional GPM-inter, IPM candidates of an IPM list are as follows.

An intra mode parallel to a GPM partition shape
A first mode derived through DIMD (both a top template and a left template are used)
A first mode derived through TIMD (both the top template and the left template are used)
An intra mode perpendicular to the GPM partition shape
A planar mode
Neighboring intra modes

To derive the neighboring intra modes of (6), neighboring blocks of a current block, that is, a left neighboring block, an upper neighboring block, a lower left neighboring block, an upper right neighboring block, an upper left neighboring block, and the like, may be taken into consideration. Even when a neighboring block is coded using an inter mode rather than an intra mode, intra mode information may be acquired by an IPM buffer. When a position indicated by a motion vector of a neighboring inter block is an intra mode, the intra mode may be stored in the IPM buffer. The intra mode stored in the IPM buffer may be utilized as an intra mode of a neighboring block.

In addition, IPM candidates constituting an IPM list in conventional GPM-inter are as follows.

An intra mode parallel to a GPM partition shape
A first mode derived through DIMD (both a top template and a left template are used)
A first mode derived through TIMD (the top template is used)
A first mode derived through TIMD (the left template is used)
An intra mode perpendicular to the GPM partition shape
A planar mode
Neighboring intra modes

Derivation of the neighboring intra modes of (7) is the same as described above in connection with GPM-inter.

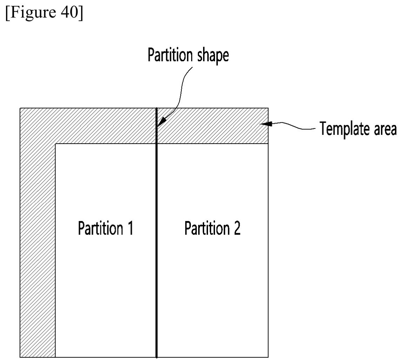

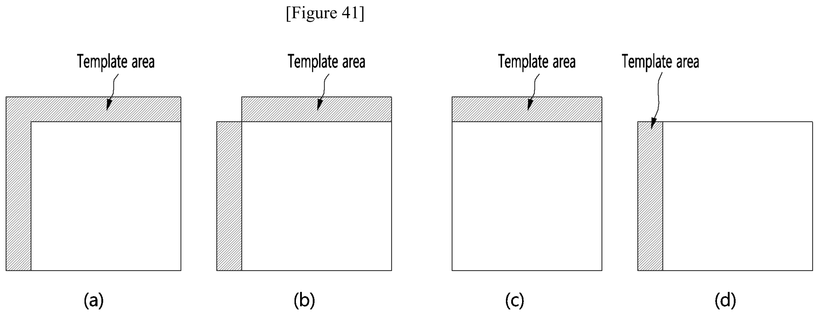

FIGS. 40 and 41 are diagrams illustrating an IPM list candidate derivation method according to the present disclosure.

According to an embodiment of the present disclosure, a method of deriving an intra mode in a DIMD mode may vary depending on a GPM partition shape.

Specifically, in the example shown in FIG. 40, a first partition (partition 1) neighbors a left template and a top template and thus may be affected by both. Therefore, an intra mode of the first partition may be derived using a template area shown in FIG. 41A or 41B. Also, a second partition (partition 2) only neighbors a top template. Therefore, an intra mode of the second partition may be derived using a template area shown in FIG. 41C.

As described above, in the case of deriving an intra mode using DIMD, when a partition neighbors both a left template and a top template, the template area of FIG. 41A or 41B may be used, when a partition only neighbors a top template, the template area of FIG. 41C may be used, and when a partition neighbors only a left template, the template area of FIG. 41D may be used. Here, a first mode (or best mode) derived using FIG. 41A or 41B may be referred to as dimdMode_AL, a first mode (or best mode) derived using FIG. 41C may be referred to as dimdMode_A, and a first mode (or best mode) derived using FIG. 41D may be referred to as dimdMode_L.

According to another example of the present disclosure, a method of deriving an intra mode in a TIMD mode may vary depending on a GPM partition shape.

Specifically, in the example shown in FIG. 40, the first partition (partition 1) neighbors the left template and the top template and thus may be affected by both. Therefore, an intra mode of the first partition may be derived using the template area shown in FIG. 41A or 41B. Also, the second partition (partition 2) only neighbors the top template. Therefore, an intra mode of the second partition may be derived using the template area shown in FIG. 41C.

As described above, in the case of deriving an intra mode using TIMD, when a partition neighbors both a left template and a top template, the template area of FIG. 41A or 41B may be used, when a partition only neighbors a top template, the template area of FIG. 41C may be used, and when a partition neighbors only a left template, the template area of FIG. 41D may be used. Here, a first mode (or best mode) derived using FIG. 41A or 41B may be referred to as timdMode_AL, a first mode (or best mode) derived using FIG. 41C may be referred to as timdMode_A, and a first mode (or best mode) derived using FIG. 41D may be referred to as timdMode_L.

A size of a template area used for deriving an intra mode may change in the cases of DIMD and TIMD. For example, a size of a template area used in DIMD may be 3, and a size of a template area used in TIMD may be 4 or 2.

According to an example pf the present disclosure, an IPM list may include the following intra mode candidates.

An intra mode parallel to a GPM partition shape
dimdMode_AL
dimdMode_A
dimdMode_L
tmdMode_AL
tmdMode_A
tmdMode_L
A planar mode
Neighboring intra modes

Derivation of the neighboring intra modes of (9) is the same as described above in connection with the above-described conventional method.

According to another example of the present disclosure, an IPM list for a partition neighboring both a left template and a top template may include the following candidate modes. However, the configuration order of the IPM list given below may change, and duplicate intra mode candidates may be excluded.

An intra mode parallel to a GPM partition shape
dimdMode_AL
tmdMode_AL
A planar mode
Neighboring intra modes

Derivation of the neighboring intra modes of (5) is the same as described above in connection with the above-described conventional method.

According to still another example of the present disclosure, an IPM list for a partition only neighboring a left template may include the following candidate modes. However, the configuration order of the IPM list given below may change, and duplicate intra mode candidates may be excluded.

An intra mode parallel to a GPM partition shape
dimdMode_L
tmdMode_L
A planar mode
Neighboring intra modes

Derivation of the neighboring intra modes of (5) is the same as described above in connection with the above-described conventional method.

Alternatively, timdMode_AL may be used instead of timdMode_L.

Alternatively, dimdMode_AL may be used instead of dimdMode_L.

According to yet another example of the present disclosure, an IPM list for a partition only neighboring a top template may include the following candidate modes. However, the configuration order of the IPM list given below may change, and duplicate intra mode candidates may be excluded.

An intra mode parallel to a GPM partition shape
dimdMode_A
tmdMode_A
A planar mode
Neighboring intra modes

Derivation of the neighboring intra modes of (5) is the same as described above in connection with the above-described conventional method.

Alternatively, timdMode_AL may be used instead of timdMode_A.

Alternatively, dimdMode_AL may be used instead of dimdMode_A.

According to an embodiment of the present disclosure, intra mode candidates constituting an IPM list for GPM-inter may be identical to intra mode candidates constituting an IPM list for GPM-intra. In addition, a configuration order of the IPM list for GPM-inter may be identical to a configuration order of the IPM list for GPM-intra.

According to another embodiment of the present disclosure, intra mode candidates constituting an IPM list for GPM-inter and intra mode candidates constituting an IPM list for GPM-intra may include a second mode (secondary intra mode) of DIMD or a second mode of TIMD. Alternatively, a second mode in which a partition shape is taken into consideration may be included. For example, the intra mode candidates may include a second mode derived using a top template alone, a second mode derived using a left template alone, or a second mode derived using both the top template and the left template.

According to the present embodiment, in the case of deriving an IPM candidate, a template area is adaptively used in consideration of a partition shape of GPM, which allows effective generation of an IPM list. Accordingly, performance of GPM can be improved.

Embodiments 1 to 6 have been separately described above, and various additional/modified embodiments have been described in each embodiment. However, this is for convenience of description and does not imply that the embodiments are mutually exclusive. For example, two or more of various embodiments of the present disclosure may be combined as a new embodiment.

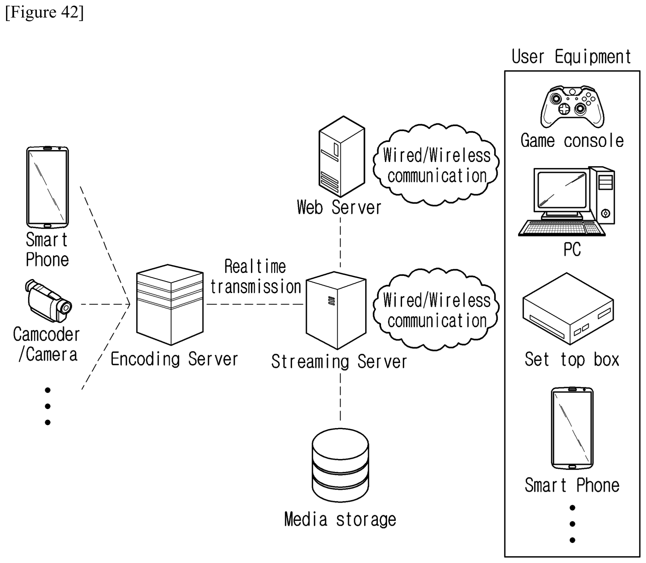

FIG. 42 is a view showing a content streaming system to which an embodiment of the present disclosure is applicable.

As shown in FIG. 42, the content streaming system to which the embodiment of the present disclosure is applied may largely include an encoding server, a streaming server, a web server, a media storage, a user device, and a multimedia input device.

The encoding server compresses content input from multimedia input devices such as a smartphone, a camera, a camcorder, and the like into digital data to generate a bitstream and transmits the bitstream to the streaming server. As another example, when the multimedia input devices such as a smartphone, a camera, a camcorder, and the like directly generate a bitstream, the encoding server may be omitted.

The bitstream may be generated by an image encoding method or an image encoding apparatus to which the embodiment of the present disclosure is applied, and the streaming server may temporarily store the bitstream in a process of transmitting or receiving the bitstream.

The streaming server transmits multimedia data to the user device on the basis of a user's request through the web server, and the web server may serve as a medium that informs the user of what services are available. When the user requests a desired service from the web server, the web server may forward the request to the streaming server, and the streaming server may transmit multimedia data to the user. Here, the content streaming system may include a separate control server. In this case, the control server serves to control a command/response between devices in the content streaming system.

The streaming server may receive content from the media storage and/or the encoding server. For example, when content is received from the encoding server, the content may be received in real time. In this case, to provide a smooth streaming service, the streaming server may store the bitstream for a certain time.

Examples of the user device may include a mobile phone, a smartphone, a laptop computer, a digital broadcasting terminal, a personal digital assistant (PDA), a portable multimedia player (PMP), a navigation device, a slate personal computer (PC), a tablet PC, an ultrabook, a wearable device (e.g., a smartwatch, smart glasses, or a head mounted display (HMD)), a digital television (TV), a desktop computer, digital signage, and the like.

Each server in the content streaming system may be operated as a distributed server, and in this case, data received from each server may be distributed.

The scope of the disclosure includes software or machine-executable commands (e.g., an operating system, an application, firmware, a program, and the like) for enabling operations according to the methods of various embodiments to be executed on an apparatus or a computer, and a non-transitory computer-readable medium in which such software or commands are stored, that is executable on the apparatus or the computer.

[Industrial Applicability]

The embodiments of the present disclosure may be used to encode or decode an image.

**Claims**

1.    A method of decoding an image performed by an image decoding apparatus, the method comprising:

   acquiring geometric partitioning mode (GPM) information on the basis of application of a GPM to a current block; determining at least one of a partition shape of the GPM and a blending area on the basis of the acquired GPM information; refining at least one of the partition shape and the blending area on the basis of template matching (TM); and generating a prediction block for the current block by executing the GPM on the current block on the basis of the refined partition shape or the refined blending area.

2.    The method of claim 1, wherein the refining of the partition shape comprises:

   deriving one or more partition shape candidates; selecting one of the partition shape candidates on the basis of TM costs; and refining the partition shape on the basis of the selected partition shape candidate.

3.    The method of claim 2, wherein the partition shape candidate includes at least one of a partition direction candidate and a distance candidate.

4.    The method of claim 1, wherein the refining of the blending area comprises:

   deriving one or more blending area candidates; selecting one of the blending area candidates on the basis of TM costs; and refining the blending area on the basis of the selected blending area candidate.

5.    The method of claim 4, wherein the blending area candidates are derived by adding or subtracting a certain size to or from a signaled blending area of the current block.

6.    The method of claim 1, wherein both sides of the blending area have different sizes on the basis of a partitioning boundary of the GPM.

7.    The method of claim 6, wherein the GPM information includes information on the sizes of both sides.

8.    The method of claim 6, wherein the GPM information includes information on a reference size of blending areas, and the sizes of both sides are derived on the basis of the reference size and TM.

9.    The method of claim 4, wherein the determining of the blending area comprises:

   reordering the blending area candidates on the basis of TM; and selecting one of the reordered blending area candidates.

10.    The method of claim 1, wherein the GPM is a spatial GPM (SGPM).

11.    The method of claim 1, further comprising generating an intra prediction mode (IPM) list to derive an IPM of the current block, wherein IPM candidates included in the IPM list are derived on the basis of the partition shape of the GPM.

12.    A method of encoding an image performed by an image encoding apparatus, the method comprising:

determining at least one of a partition shape and a blending area of a geometric partitioning mode (GPM) on the basis of application of the GPM to a current block, wherein the determined partition shape or blending area of the GPM is encoded on the basis of GPM information;
refining at least one of the partition shape and the blending area on the basis of template matching (TM); and generating a prediction block for the current block by executing the GPM on the current block on the basis of the refined partition shape or the refined blending area.

13. A computer-readable recording medium for storing a bitstream generated using an image encoding method, wherein the image encoding method comprises:

determining at least one of a partition shape and a blending area of a geometric partitioning mode (GPM) on the basis of application of the GPM to a current block, wherein the determined partition shape or blending area of the GPM is encoded on the basis of GPM information;
refining at least one of the partition shape and the blending area on the basis of template matching (TM); and generating a prediction block for the current block by executing the GPM on the current block on the basis of the refined partition shape or the refined blending area.

14. A method of transmitting a bitstream generated using an image encoding method, the method comprising:

determining at least one of a partition shape and a blending area of a geometric partitioning mode (GPM) on the basis of application of the GPM to a current block, wherein the determined partition shape or blending area of the GPM is encoded on the basis of GPM information;
refining at least one of the partition shape and the blending area on the basis of template matching (TM); and

generating a prediction block for the current block by executing the GPM on the current block on the basis of the refined partition shape or the refined blending area.

[Figure 1]

[Figure 2]

100 IMAGE ENCODING APPARATUS

INPUT IMAGE → 110 IMAGE PARTITIONER → 115 (+, −) → 120 TRANSFORMER → 130 QUANTIZER → 190 ENTROPY ENCODER → BITSTREAM

140 DEQUANTIZER → 150 INVERSE TRANSFORMER → 155 (+)

180 INTER PREDICTION UNIT
185 INTRA PREDICTION UNIT
170 DPB / MEMORY
160 FILTER

[Figure 3]

[Figure 4]

[Figure 5]

[Figure 6]

(a)     (b)     (c)     (d)

[Figure 7]

GPM blending area

Min.

Max.

Weight

32

W_0

Partition A

Partition B

GPM partitioning boundary

-4τ   -τ   -τ/2 -τ/4  0  τ/4 τ/2  τ   2τ        4τ

d

[Figure 8]

[Figure 9]

[Figure 10]

[Figure 11]

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

ampl(ipm)

M_1    M_2    ipm

$\omega_1$    $\omega_2$    $\omega_3$

Fusion

Pred_1

Predict with M_1

Reference pixels

Pred_2

Predict with M_2

Predictor block

Pred_3

Planar

$\sum_{i=1}^{3} \omega_i \times Pred_i$

EP 4 645 853 A1

[Figure 12]

[Figure 13]

```
If( cu_sgpm_flag )
  {
   partition_mode_idx
   intra_pred_mode0_idx
   intra_pred_mode1_idx
  }
```

(a)

```
If( cu_sgpm_flag )
  {
   sgpm_cand_idx
  }
```

```
partition_mode_idx
intra_pred_mode0_idx
intra_pred_mode0_idx
```

(b)

[Figure 14]

[Figure 15]

| | |
|---|---|
| if( geoFlag[ x0 ][ y0 ] ) { | |
|   geoBlending_idx[ x0 ][ y0 ] | ae(v) |
|   geoMMVDFlag0[ x0 ][ y0 ] | ae(v) |
|   if(geoMMVDFlag0[ x0 ][ y0 ]){ | |
|     mmvd_distance[ x0 ][ y0 ] | ae(v) |
|     mmvd_direction[ x0 ][ y0 ] | ae(v) |
|   } | |
|   else { | |
|     GPMIntraFlag0[ x0 ][ y0 ] | ae(v) |
|   } | |
|   if (!bUseOnlyOneVector || GPMIntraFlag0[ x0 ][ y0 ]) { | |
|     if(geoMMVDFlag1[ x0 ][ y0 ]){ | |
|       mmvd_distance[ x0 ][ y0 ] | ae(v) |
|       mmvd_direction[ x0 ][ y0 ] | ae(v) |
|     } | |
|     else if (!GPMIntraFlag0[ x0 ][ y0 ]) { | |
|       GPMIntraFlag1[ x0 ][ y0 ] | ae(v) |
|     } | |
|   } | |
|   if (!geoMMVDFlag0[ x0 ][ y0 ] && !geoMMVDFlag1[ x0 ][ y0 ]) | |
|   { | |
|     TMMergeFlag[ x0 ][ y0 ] | ae(v) |
|   } | |
|   merge_gpm_partition_idx[ x0 ][ y0 ] | ae(v) |
|   merge_gpm_idx0[ x0 ][ y0 ] | ae(v) |
|   if( MaxNumGpmMergeCand > 2 ) | |
|     merge_gpm_idx1[ x0 ][ y0 ] | ae(v) |

[Figure 16]

[Figure 17]

[Figure 18]

(DistX,DistY), distanceIdx=(0, 16), 3

(0, 16), 4    (0, 16), 2    Template area

[Figure 19]

Partition shape

Template area

| 0 | 1 | 1 | 1 | 1 | 1 | 1 | 1 | 1 |
| 0 | 0 | 1 | 1 | 1 | 1 | 1 | 1 | 1 |
| 0 | 0 | 0 | 1 | 1 | 1 | 1 | 1 | 1 |
| 0 | 0 | 0 | 0 | 1 | 1 | 1 | 1 | 1 |
| 0 | 0 | 0 | 0 | 0 | 1 | 1 | 1 | 1 |
| 0 | 0 | 0 | 0 | 0 | 0 | 1 | 1 | 1 |
| 0 | 0 | 0 | 0 | 0 | 0 | 0 | 1 | 1 |
| 0 | 0 | 0 | 0 | 0 | 0 | 0 | 0 | 1 |
| 0 | 0 | 0 | 0 | 0 | 0 | 0 | 0 | 0 |

[Figure 20]

(DistX,DistY), CandDistanceIdx
= (-4, 4), 4

| 0 | 0 | 0 | 0 | 0 | 1 | 1 | 1 | 1 |
| 0 | 0 | 0 | 0 | 0 | 0 | 1 | 1 | 1 |
| 0 | 0 | 0 | 0 | 0 | 0 | 0 | 1 | 1 |
| 0 | 0 | 0 | 0 | 0 | 0 | 0 | 0 | 1 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

(DistX,DistY), CandDistanceIdx
= (-4, 4), 5

| 0 | 0 | 0 | 0 | 0 | 0 | 1 | 1 | 1 |
| 0 | 0 | 0 | 0 | 0 | 0 | 0 | 1 | 1 |
| 0 | 0 | 0 | 0 | 0 | 0 | 0 | 0 | 1 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

(DistX,DistY), CandDistanceIdx
= (-4, 4), 6

| 0 | 0 | 0 | 0 | 0 | 0 | 0 | 1 | 1 |
| 0 | 0 | 0 | 0 | 0 | 0 | 0 | 0 | 1 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

(DistX,DistY), CandDistanceIdx
= (-4, 4), 7

| 0 | 0 | 0 | 0 | 0 | 0 | 0 | 0 | 1 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

[Figure 21]

| Partition shape | | | | | | | | Template area |
|---|---|---|---|---|---|---|---|---|
| 16 | 20 | 24 | 28 | 32 | 32 | 32 | 32 | 32 |
| 12 | 16 | 20 | 24 | 28 | 32 | 32 | 32 | 32 |
| 8 | 12 | 16 | 20 | 24 | 28 | 32 | 32 | 32 |
| 4 | 8 | 12 | 16 | 20 | 24 | 28 | 32 | 32 |
| 0 | 4 | 8 | 12 | 16 | 20 | 24 | 28 | 32 |
| 0 | 0 | 4 | 8 | 12 | 16 | 20 | 24 | 28 |
| 0 | 0 | 0 | 4 | 8 | 12 | 16 | 20 | 24 |
| 0 | 0 | 0 | 0 | 4 | 8 | 12 | 16 | 20 |
| 0 | 0 | 0 | 0 | 0 | 4 | 8 | 12 | 16 |

[Figure 22]

(DistX,DistY), CandDistanceIdx = (-4, 4), 4

| 0 | 4 | 8 | 12 | 16 | 20 | 24 | 28 | 32 |
|---|---|---|---|---|---|---|---|---|
| 0 | 0 | 4 | 8 | 12 | 16 | 20 | 24 | 28 |
| 0 | 0 | 0 | 4 | 8 | 12 | 16 | 20 | 24 |
| 0 | 0 | 0 | 0 | 4 | 8 | 12 | 16 | 20 |
| 0 | 0 | 0 | 0 | 0 | 4 | 8 | 12 | 16 |
| 0 | 0 | 0 | 0 | 0 | 0 | 4 | 8 | 12 |
| 0 | 0 | 0 | 0 | 0 | 0 | 0 | 4 | 8 |
| 0 | 0 | 0 | 0 | 0 | 0 | 0 | 0 | 4 |
| 0 | 0 | 0 | 0 | 0 | 0 | 0 | 0 | 0 |

(DistX,DistY), CandDistanceIdx = (-4, 4), 5

| 0 | 0 | 4 | 8 | 12 | 16 | 20 | 24 | 28 |
|---|---|---|---|---|---|---|---|---|
| 0 | 0 | 0 | 4 | 8 | 12 | 16 | 20 | 24 |
| 0 | 0 | 0 | 0 | 4 | 8 | 12 | 16 | 20 |
| 0 | 0 | 0 | 0 | 0 | 4 | 8 | 12 | 16 |
| 0 | 0 | 0 | 0 | 0 | 0 | 4 | 8 | 12 |
| 0 | 0 | 0 | 0 | 0 | 0 | 0 | 4 | 8 |
| 0 | 0 | 0 | 0 | 0 | 0 | 0 | 0 | 4 |
| 0 | 0 | 0 | 0 | 0 | 0 | 0 | 0 | 0 |
| 0 | 0 | 0 | 0 | 0 | 0 | 0 | 0 | 0 |

(DistX,DistY), CandDistanceIdx = (-4, 4), 6

| 0 | 0 | 0 | 4 | 8 | 12 | 16 | 20 | 24 |
|---|---|---|---|---|---|---|---|---|
| 0 | 0 | 0 | 0 | 4 | 8 | 12 | 16 | 20 |
| 0 | 0 | 0 | 0 | 0 | 4 | 8 | 12 | 16 |
| 0 | 0 | 0 | 0 | 0 | 0 | 4 | 8 | 12 |
| 0 | 0 | 0 | 0 | 0 | 0 | 0 | 4 | 8 |
| 0 | 0 | 0 | 0 | 0 | 0 | 0 | 0 | 4 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

(DistX,DistY), CandDistanceIdx = (-4, 4), 7

| 0 | 0 | 0 | 0 | 4 | 8 | 12 | 16 | 20 |
|---|---|---|---|---|---|---|---|---|
| 0 | 0 | 0 | 0 | 0 | 4 | 8 | 12 | 16 |
| 0 | 0 | 0 | 0 | 0 | 0 | 4 | 8 | 12 |
| 0 | 0 | 0 | 0 | 0 | 0 | 0 | 4 | 8 |
| 0 | 0 | 0 | 0 | 0 | 0 | 0 | 0 | 4 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

```
for (int angleIdx = 0; angleIdx < GEO_NUM_ANGLES_EXT; angleIdx++){
    for (int bldIdx = 0; bldIdx < TOTAL_GEO_NUM_BLD; bldIdx++){
        if(angleIdx <GEO_NUM_ANGLES){ // EXISTING PARTITION SHAPE idx : 0~31
            distanceX = angleIdx;
            distanceY = (distanceX + (GEO_NUM_ANGLES >> 2)) % GEO_NUM_ANGLES;
            rho = (g_Dis[distanceX] << (GEO_MAX_CU_LOG2 + 1)) +
(g_Dis[distanceY] << (GEO_MAX_CU_LOG2 + 1));
        }else{ // NEW PARTITION SHAPE idx : 32~63
            distanceX = angleIdx - GEO_NUM_ANGLES;
            distanceY = (distanceX + (GEO_NUM_ANGLES >> 2)) % GEO_NUM_ANGLES;
            rho = (g_Dis_ext[distanceX] << (GEO_MAX_CU_LOG2 + 1)) +
(g_Dis_ext[distanceY] << (GEO_MAX_CU_LOG2 + 1));
        }
        maskOffset = (2 * GEO_MAX_CU_SIZE - GEO_WEIGHT_MASK_SIZE) >> 1;
        int index = 0;

for (int y = -GEO_TM_ADDED_WEIGHT_MASK_SIZE; y < GEO_WEIGHT_MASK_SIZE+
GEO_WEIGHT_MASK_SIZE+GEO_TM_ADDED_WEIGHT_MASK_SIZE; y++) {
        if(angleIdx <GEO_NUM_ANGLES){ // EXISTING PARTITION SHAPE idx : 0~31
            lookUpY = (((y + maskOffset) << 1) + 1) * g_Dis[distanceY];
        }else{ // NEW PARTITION SHAPE idx : 32~63
            lookUpY = (((y + maskOffset) << 1) + 1) * g_Dis_ext[distanceY];
        }
        for (int x = -GEO_TM_ADDED_WEIGHT_MASK_SIZE; x <
GEO_WEIGHT_MASK_SIZE+ GEO_TM_ADDED_WEIGHT_MASK_SIZE; x++, index++){
            sxi = ((x + maskOffset) << 1) + 1;
            if(angleIdx <GEO_NUM_ANGLES){ // EXISTING PARTITION SHAPE idx : 0~31
                weightIdx = sxi * g_Dis[distanceX] + lookUpY – rho;
            }else{ // NEW PARTITION SHAPE idx : 32~63
                weightIdx = sxi * g_Dis_ext[distanceX] + lookUpY – rho;
            }

        if (g_bld2Width[bldIdx] > 1) {
                weightLinearIdx = 8 * g_bld2Width[bldIdx] + weightIdx;
                g_globalGeoWeightsTpl[bldIdx][angleIdx][index] = Clip3(0, 32,
(weightLinearIdx + (g_bld2Width[bldIdx] >> 2)) >> floorLog2(g_bld2Width[bldIdx]
>> 1));
            }
            else
            {
             weightLinearIdx = 8 + weightIdx;
                g_globalGeoWeightsTpl[bldIdx][angleIdx][index] = Clip3(0, 32,
weightLinearIdx << 1);
            }
        }
    }
}
}
```

[Figure 24]

```
for (int angleIdx = 0; angleIdx < GEO_NUM_ANGLES_EXT; angleIdx++){
      if(angleIdx <GEO_NUM_ANGLES){ // EXISTING PARTITION SHAPE idx : 0~31
          distanceX = angleIdx;
           distanceY = (distanceX + (GEO_NUM_ANGLES >> 2)) % GEO_NUM_ANGLES;
           rho = (g_Dis[distanceX] << (GEO_MAX_CU_LOG2 + 1)) + (g_Dis[distanceY]
<< (GEO_MAX_CU_LOG2 + 1));
      }else{ // NEW PARTITION SHAPE idx : 32~63
          distanceX = angleIdx - GEO_NUM_ANGLES;
           distanceY = (distanceX + (GEO_NUM_ANGLES >> 2)) % GEO_NUM_ANGLES;
           rho = (g_Dis_ext[distanceX] << (GEO_MAX_CU_LOG2 + 1)) +
(g_Dis_ext[distanceY] << (GEO_MAX_CU_LOG2 + 1));
      }
      maskOffset = (2 * GEO_MAX_CU_SIZE - GEO_WEIGHT_MASK_SIZE) >> 1;
      int index = 0;

      for     (int     y     =     -GEO_TM_ADDED_WEIGHT_MASK_SIZE;     y     <
GEO_WEIGHT_MASK_SIZE+ GEO_TM_ADDED_WEIGHT_MASK_SIZE; y++){
      if(angleIdx <GEO_NUM_ANGLES){ // EXISTING PARTITION SHAPE idx : 0~31
          lookUpY = (((y + maskOffset) << 1) + 1) * g_Dis[distanceY];
      }else{ // NEW PARTITION SHAPE idx : 32~63
          lookUpY = (((y + maskOffset) << 1) + 1) * g_Dis_ext[distanceY];
      }
      for (int x = -GEO_TM_ADDED_WEIGHT_MASK_SIZE; x <
GEO_WEIGHT_MASK_SIZE+ GEO_TM_ADDED_WEIGHT_MASK_SIZE; x++, index++){
          sxi = ((x + maskOffset) << 1) + 1;
          if(angleIdx <GEO_NUM_ANGLES){ // EXISTING PARTITION SHAPE idx : 0~31
             weightIdx = sxi * g_Dis[distanceX] + lookUpY – rho;
          }else{ // NEW PARTITION SHAPE idx : 32~63
             weightIdx = sxi * g_Dis_ext[distanceX] + lookUpY – rho;
          }
           g_globalGeoWeightsTpl[angleIdx][index] = weightIdx > 0 ? 1 : 0;
      }
     }
}
```

[Figure 25]

: EXISTING PARTITION SHAPE IDX : 0~31

: NEW PARTITION SHAPE IIDX : 32~63

[Figure 26]

offset X

| 4 | 8 | 12 | 16 | 20 | 28 | 32 | 32 | | 32 |
|---|---|----|----|----|----|----|----|---|----|
| 0 | 4 | 8 | 12 | 16 | 20 | 28 | 32 | | 32 |
| 0 | 0 | 4 | 8 | 12 | 16 | 20 | 28 | ··· | 32 |
| 0 | 0 | 0 | 4 | 8 | 12 | 16 | 20 | | 32 |
| 0 | 0 | 0 | 0 | 4 | 8 | 12 | 16 | | 32 |
| 0 | 0 | 0 | 0 | 0 | 4 | 8 | 12 | | 32 |
| 0 | 0 | 0 | 0 | 0 | 0 | 4 | 8 | | 32 |
| 0 | 0 | 0 | 0 | 0 | 0 | 0 | 4 | | 32 |

offset Y

Template area

Current block

32
28
24
20
16
12
8

0 0 0 0 0 0 0 0 0 0 0 0 0 0 0 0 4

GEO_WEIGHT_MASK_SIZE_EXT

GEO_WEIGHT_MASK_SIZE_EXT

offset X

| 0 | 1 | 1 | 1 | 1 | 1 | 1 | 1 | | 1 |
|---|---|---|---|---|---|---|---|---|---|
| 0 | 0 | 1 | 1 | 1 | 1 | 1 | 1 | | 1 |
| 0 | 0 | 0 | 1 | 1 | 1 | 1 | 1 | ··· | 1 |
| 0 | 0 | 0 | 0 | 1 | 1 | 1 | 1 | | 1 |
| 0 | 0 | 0 | 0 | 0 | 1 | 1 | 1 | | 1 |
| 0 | 0 | 0 | 0 | 0 | 0 | 1 | 1 | | 1 |
| 0 | 0 | 0 | 0 | 0 | 0 | 0 | 1 | | 1 |
| 0 | 0 | 0 | 0 | 0 | 0 | 0 | 0 | | 1 |

offset Y

Template area

Current block

1
1
1
1
1
1
1

0 0 0 0 0 0 0 0 0 0 0 0 0 0 0 0 0

GEO_WEIGHT_MASK_SIZE_EXT

GEO_WEIGHT_MASK_SIZE_EXT

[Figure 27]

```
offsetX = (GEO_WEIGHT_MASK_SIZE - width) >> 1;
offsetY = (GEO_WEIGHT_MASK_SIZE - height) >> 1;
if( distance > 0 ){
    if(angleIdx <GEO_NUM_ANGLES){ // EXISTING PARTITION SHAPE idx : 0~31{
        if( angle % 16 == 8 || (angle % 16 != 0 && height >= width) )
        {
            offsetY += angle < 16 ? ((distance * height) >> 3) : -((distance *
height) >> 3);
        }
        else{
            offsetX += angle < 16 ? ((distance * width) >> 3) : -((distance *
width) >> 3);
        }
    }else{ // NEW PARTITION SHAPE idx : 32~63
        if(height >= width)
        {
            offsetY += angle-32 < 16 ? ((distance * height) >> 3) : -((distance
* height) >> 3);
        }
        else
        {
            offsetX += angle-32 < 16 ? ((distance * width) >> 3) : -((distance
* width) >> 3);
        }
    }
}
```

[Figure 28]

(angleIdx, distanceIdx)
= (0, 1)

(angleIdx, distanceIdx)
= (0, 1)

(angleIdx, distanceIdx)
= (0, 1)

(angleIdx, distanceIdx)
= (0, 1)

1τ

3/4τ

5/4τ

3/2τ

```
for (int angleIdx = 0; angleIdx < GEO_NUM_ANGLES_EXT; angleIdx++){
    for (int bldIdx = 0; bldIdx < TOTAL_GEO_NUM_BLD_EXT; bldIdx++){
        if(angleIdx <GEO_NUM_ANGLES){ // EXISTING PARTITION SHAPE idx : 0~31
            distanceX = angleIdx;
             distanceY = (distanceX + (GEO_NUM_ANGLES >> 2)) % GEO_NUM_ANGLES;
            rho = (g_Dis[distanceX] << (GEO_MAX_CU_LOG2 + 1)) + (g_Dis[distanceY] <<
            (GEO_MAX_CU_LOG2 + 1));
        }else{ // NEW PARTITION SHAPE idx : 32~63
            distanceX = angleIdx - GEO_NUM_ANGLES;
             distanceY = (distanceX + (GEO_NUM_ANGLES >> 2)) % GEO_NUM_ANGLES;
            rho  =  (g_Dis_ext[distanceX]  <<  (GEO_MAX_CU_LOG2  +  1))  +
            (g_Dis_ext[distanceY] << (GEO_MAX_CU_LOG2 + 1));
        }
        maskOffset = (2 * GEO_MAX_CU_SIZE - GEO_WEIGHT_MASK_SIZE) >> 1;
        int index = 0;

        for    (int    y    =    -GEO_TM_ADDED_WEIGHT_MASK_SIZE;    y    <
        GEO_WEIGHT_MASK_SIZE+ GEO_TM_ADDED_WEIGHT_MASK_SIZE; y++)
        {
            if(angleIdx <GEO_NUM_ANGLES){ // EXISTING PARTITION SHAPE idx : 0~31
                lookUpY = (((y + maskOffset) << 1) + 1) * g_Dis[distanceY];
            }else{ // NEW PARTITION SHAPE idx : 32~63
                lookUpY = (((y + maskOffset) << 1) + 1) * g_Dis_ext[distanceY];
            }
            for    (int    x    =    -GEO_TM_ADDED_WEIGHT_MASK_SIZE;    x    <
            GEO_WEIGHT_MASK_SIZE+  GEO_TM_ADDED_WEIGHT_MASK_SIZE;  x++,
            index++){
                sxi = ((x + maskOffset) << 1) + 1;
                if(angleIdx <GEO_NUM_ANGLES){ // EXISTING PARTITION SHAPE idx : 0~31
                    weightIdx = sxi * g_Dis[distanceX] + lookUpY – rho;
                }else{ // NEW PARTITION SHAPE idx : 32~63
                    weightIdx = sxi * g_Dis_ext[distanceX] + lookUpY – rho;
                }
                if (bldIdx < TOTAL_GEO_NUM_BLD){ // EXISTING BLENDING AREA
                    if (g_bld2Width[bldIdx] > 1){
                        weightLinearIdx = 8 * g_bld2Width[bldIdx] + weightIdx;
                        g_globalGeoWeightsTpl[bldIdx][angleIdx][index]    =    Clip3(0,    32,
                (weightLinearIdx + (g_bld2Width[bldIdx] >> 2)) >> floorLog2(g_bld2Width[bldIdx] >> 1));
                    }
                    else
                    {
                        weightLinearIdx = 8 + weightIdx;
                        g_globalGeoWeightsTpl[bldIdx][angleIdx][index]    =    Clip3(0,    32,
                weightLinearIdx << 1);
                    }
                }else{ // NEW BLENDING AREA
                    if (g_bld2WidthExt[bldIdx] > 1){
                        weightLinearIdx = 8 * g_bld2WidthExt[bldIdx] + weightIdx;
                        g_globalGeoWeightsTpl[bldIdx][angleIdx][index]    =    Clip3(0,    32,
                (((3*weightLinearIdx)>>2)    +    (g_bld2WidthExt[bldIdx]    >>    2))    >>
                floorLog2(g_bld2WidthExt[bldIdx] >> 1));
                    }
                    else
                    {
                        weightLinearIdx = 8 + weightIdx;
                        g_globalGeoWeightsTpl[bldIdx][angleIdx][index]    =    Clip3(0,    32,
                ((3*weightLinearIdx)>>2)<< 1);
                    }
                }
            }
        }
    }
}
```

[Figure 30]

[Figure 31]

(angleIdx, distanceIdx) = (0, 1) — 1/4τ

(angleIdx, distanceIdx) = (0, 1) — 1/2τ

(angleIdx, distanceIdx) = (0, 1) — 1τ

(angleIdx, distanceIdx) = (0, 1) — 2τ

(angleIdx, distanceIdx) = (0, 1) — 4τ

[Figure 32]

(angleIdx, distanceIdx, geoBlending_idx)
= (16, 1, 0)

| 0 | 0 | 0 | 0 | 0 | 0 | 32 | 32 | 32 |
|---|---|---|---|---|---|----|----|----|
| 0 | 0 | 0 | 0 | 0 | 0 | 32 | 32 | 32 |
| 0 | 0 | 0 | 0 | 0 | 0 | 32 | 32 | 32 |
| 0 | 0 | 0 | 0 | 0 | 0 | 32 | 32 | 32 |
| 0 | 0 | 0 | 0 | 0 | 0 | 32 | 32 | 32 |
| 0 | 0 | 0 | 0 | 0 | 0 | 32 | 32 | 32 |
| 0 | 0 | 0 | 0 | 0 | 0 | 32 | 32 | 32 |
| 0 | 0 | 0 | 0 | 0 | 0 | 32 | 32 | 32 |
| 0 | 0 | 0 | 0 | 0 | 0 | 32 | 32 | 32 |

(angleIdx, distanceIdx, geoBlending_idx)
= (16, 1, 1)

| 0 | 0 | 0 | 0 | 0 | 8 | 24 | 32 | 32 |
|---|---|---|---|---|---|----|----|----|
| 0 | 0 | 0 | 0 | 0 | 8 | 24 | 32 | 32 |
| 0 | 0 | 0 | 0 | 0 | 8 | 24 | 32 | 32 |
| 0 | 0 | 0 | 0 | 0 | 8 | 24 | 32 | 32 |
| 0 | 0 | 0 | 0 | 0 | 8 | 24 | 32 | 32 |
| 0 | 0 | 0 | 0 | 0 | 8 | 24 | 32 | 32 |
| 0 | 0 | 0 | 0 | 0 | 8 | 24 | 32 | 32 |
| 0 | 0 | 0 | 0 | 0 | 8 | 24 | 32 | 32 |
| 0 | 0 | 0 | 0 | 0 | 8 | 24 | 32 | 32 |

(angleIdx, distanceIdx, geoBlending_idx)
= (16, 1, 2)

| 0 | 0 | 0 | 0 | 4 | 12 | 20 | 28 | 32 |
|---|---|---|---|---|----|----|----|----|
| 0 | 0 | 0 | 0 | 4 | 12 | 20 | 28 | 32 |
| 0 | 0 | 0 | 0 | 4 | 12 | 20 | 28 | 32 |
| 0 | 0 | 0 | 0 | 4 | 12 | 20 | 28 | 32 |
| 0 | 0 | 0 | 0 | 4 | 12 | 20 | 28 | 32 |
| 0 | 0 | 0 | 0 | 4 | 12 | 20 | 28 | 32 |
| 0 | 0 | 0 | 0 | 4 | 12 | 20 | 28 | 32 |
| 0 | 0 | 0 | 0 | 4 | 12 | 20 | 28 | 32 |
| 0 | 0 | 0 | 0 | 4 | 12 | 20 | 28 | 32 |

(angleIdx, distanceIdx, geoBlending_idx)
= (16, 1, 3)

| 0 | 0 | 2 | 6 | 10 | 14 | 18 | 22 | 26 |
|---|---|---|---|----|----|----|----|----|
| 0 | 0 | 2 | 6 | 10 | 14 | 18 | 22 | 26 |
| 0 | 0 | 2 | 6 | 10 | 14 | 18 | 22 | 26 |
| 0 | 0 | 2 | 6 | 10 | 14 | 18 | 22 | 26 |
| 0 | 0 | 2 | 6 | 10 | 14 | 18 | 22 | 26 |
| 0 | 0 | 2 | 6 | 10 | 14 | 18 | 22 | 26 |
| 0 | 0 | 2 | 6 | 10 | 14 | 18 | 22 | 26 |
| 0 | 0 | 2 | 6 | 10 | 14 | 18 | 22 | 26 |
| 0 | 0 | 2 | 6 | 10 | 14 | 18 | 22 | 26 |

(angleIdx, distanceIdx, geoBlending_idx)
= (16, 1, 4)

| 5 | 7 | 9 | 11 | 13 | 15 | 17 | 19 | 21 |
|---|---|---|----|----|----|----|----|----|
| 5 | 7 | 9 | 11 | 13 | 15 | 17 | 19 | 21 |
| 5 | 7 | 9 | 11 | 13 | 15 | 17 | 19 | 21 |
| 5 | 7 | 9 | 11 | 13 | 15 | 17 | 19 | 21 |
| 5 | 7 | 9 | 11 | 13 | 15 | 17 | 19 | 21 |
| 5 | 7 | 9 | 11 | 13 | 15 | 17 | 19 | 21 |
| 5 | 7 | 9 | 11 | 13 | 15 | 17 | 19 | 21 |
| 5 | 7 | 9 | 11 | 13 | 15 | 17 | 19 | 21 |
| 5 | 7 | 9 | 11 | 13 | 15 | 17 | 19 | 21 |

[Figure 33]

```
                    ┌──────────────┐
                    │    START     │
                    └──────┬───────┘
                           │         S3310
                           ▼
          NO    ╱──────────────────────╲
      ┌─────────   IS SGPM EXECUTED?     ╲
      │         ╲──────────────────────╱
      │                    │
      │                   Yes
      │                    ▼
      │         ┌─────────────────────────┐
      │         │   IPM LIST DERIVATION    │─── S3320
      │         └───────────┬─────────────┘
      │                     ▼
      │         ┌─────────────────────────┐
      │         │    TM based reordering   │─── S3330
      │         └───────────┬─────────────┘
      │                     ▼
      │         ┌─────────────────────────┐
      │         │    TM based refinement   │─── S3340
      │         └───────────┬─────────────┘
      │                     ▼
      │            ┌──────────────┐
      └───────────▶│     END      │
                   └──────────────┘
```

[Figure 34]

[Figure 35]

[Figure 36]

| | |
|---|---|
| if( geoFlag[ x0 ][ y0 ] ) { | |
| **geoBlending_idx0[ x0 ][ y0 ]** | ae(v) |
| **geoBlending_idx1[ x0 ][ y0 ]** | ae(v) |
| geoMMVDFlag0[ x0 ][ y0 ] | ae(v) |
| if(geoMMVDFlag0[ x0 ][ y0 ]){ | |
| mmvd_distance[ x0 ][ y0 ] | ae(v) |
| mmvd_direction[ x0 ][ y0 ] | ae(v) |
| } | |
| else { | |
| GPMIntraFlag0[ x0 ][ y0 ] | ae(v) |
| } | |
| if (!bUseOnlyOneVector \|\| GPMIntraFlag0[ x0 ][ y0 ]) { | |
| if(geoMMVDFlag1[ x0 ][ y0 ]){ | |
| mmvd_distance[ x0 ][ y0 ] | ae(v) |
| mmvd_direction[ x0 ][ y0 ] | ae(v) |
| } | |
| else if (!GPMIntraFlag0[ x0 ][ y0 ]) { | |
| GPMIntraFlag1[ x0 ][ y0 ] | ae(v) |
| } | |
| } | |
| if (!geoMMVDFlag0[ x0 ][ y0 ] && !geoMMVDFlag1[ x0 ][ y0 ]) | |
| { | |
| TMMergeFlag[ x0 ][ y0 ] | ae(v) |
| } | |
| merge_gpm_partition_idx[ x0 ][ y0 ] | ae(v) |
| merge_gpm_idx0[ x0 ][ y0 ] | ae(v) |
| if( MaxNumGpmMergeCand > 2 ) | |
| merge_gpm_idx1[ x0 ][ y0 ] | ae(v) |

[Figure 37]

| | |
|---|---|
| if( geoFlag[ x0 ][ y0 ] ) { | |
|     geoMMVDFlag0[ x0 ][ y0 ] | ae(v) |
|     if(geoMMVDFlag0[ x0 ][ y0 ]){ | |
|         mmvd_distance[ x0 ][ y0 ] | ae(v) |
|         mmvd_direction[ x0 ][ y0 ] | ae(v) |
|     } | |
|     else { | |
|         GPMIntraFlag0[ x0 ][ y0 ] | ae(v) |
|     } | |
|     if (!bUseOnlyOneVector || GPMIntraFlag0[ x0 ][ y0 ]) { | |
|         if(geoMMVDFlag1[ x0 ][ y0 ]){ | |
|           mmvd_distance[ x0 ][ y0 ] | ae(v) |
|           mmvd_direction[ x0 ][ y0 ] | ae(v) |
|         } | |
|         else if (!GPMIntraFlag0[ x0 ][ y0 ]) { | |
|           GPMIntraFlag1[ x0 ][ y0 ] | ae(v) |
|         } | |
|     } | |
|     if (!geoMMVDFlag0[ x0 ][ y0 ] && !geoMMVDFlag1[ x0 ][ y0 ]) | |
|     { | |
|         TMMergeFlag[ x0 ][ y0 ] | ae(v) |
|     } | |
|     merge_gpm_partition_idx[ x0 ][ y0 ] | ae(v) |
|     merge_gpm_idx0[ x0 ][ y0 ] | ae(v) |
|     if( MaxNumGpmMergeCand > 2 ) | |
|         merge_gpm_idx1[ x0 ][ y0 ] | ae(v) |
|     **geoBlending_idx0[ x0 ][ y0 ]** | ae(v) |
|     **geoBlending_idx1[ x0 ][ y0 ]** | ae(v) |

[Figure 38]

| | |
|---|---|
| if( geoFlag[ x0 ][ y0 ] ) { | |
| **blendAreaIsSame** | ae(v) |
| **geoBlending_idx0[ x0 ][ y0 ]** | ae(v) |
| **if (!blendAreaIsSame){** | |
| **geoBlending_idx1[ x0 ][ y0 ]** | ae(v) |
| **}** | |
| geoMMVDFlag0[ x0 ][ y0 ] | ae(v) |
| if(geoMMVDFlag0[ x0 ][ y0 ]){ | |
| mmvd_distance[ x0 ][ y0 ] | ae(v) |
| mmvd_direction[ x0 ][ y0 ] | ae(v) |
| } | |
| else { | |
| GPMIntraFlag0[ x0 ][ y0 ] | ae(v) |
| } | |
| if (!bUseOnlyOneVector \|\| GPMIntraFlag0[ x0 ][ y0 ]) { | |
| if(geoMMVDFlag1[ x0 ][ y0 ]){ | |
| mmvd_distance[ x0 ][ y0 ] | ae(v) |
| mmvd_direction[ x0 ][ y0 ] | ae(v) |
| } | |
| else if (!GPMIntraFlag0[ x0 ][ y0 ]) { | |
| GPMIntraFlag1[ x0 ][ y0 ] | ae(v) |
| } | |
| } | |
| if (!geoMMVDFlag0[ x0 ][ y0 ] && !geoMMVDFlag1[ x0 ][ y0 ]) | |
| { | |
| TMMergeFlag[ x0 ][ y0 ] | ae(v) |
| } | |
| merge_gpm_partition_idx[ x0 ][ y0 ] | ae(v) |
| merge_gpm_idx0[ x0 ][ y0 ] | ae(v) |
| if( MaxNumGpmMergeCand > 2 ) | |
| merge_gpm_idx1[ x0 ][ y0 ] | ae(v) |

[Figure 39]

Partition shape     Partition shape     Partition shape     Partition shape

0.5τ 1τ     0.5τ 0.25τ     1τ 0.5τ     0.25τ 0.5τ

EP 4 645 853 A1

[Figure 40]

[Figure 41]

(a)    (b)    (c)    (d)

Template area

[Figure 42]

## INTERNATIONAL SEARCH REPORT

| International application No. |
|---|
| **PCT/KR2023/021895** |

### A.    CLASSIFICATION OF SUBJECT MATTER

**H04N 19/119**(2014.01)i; **H04N 19/157**(2014.01)i; **H04N 19/52**(2014.01)i; **H04N 19/593**(2014.01)i; **H04N 19/11**(2014.01)i; **H04N 19/109**(2014.01)i; **H04N 19/176**(2014.01)i

According to International Patent Classification (IPC) or to both national classification and IPC

### B.    FIELDS SEARCHED

Minimum documentation searched (classification system followed by classification symbols)

H04N 19/119(2014.01); H04N 11/02(2006.01); H04N 19/105(2014.01); H04N 19/11(2014.01); H04N 19/463(2014.01); H04N 19/96(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 기하학 분할 모드(geometric partition mode, GPM), 블렌딩 (blending), 개선(refine), 템플릿(template), 예측(predict)

### C.    DOCUMENTS CONSIDERED TO BE RELEVANT

| Category* | Citation of document, with indication, where appropriate, of the relevant passages | Relevant to claim No. |
|---|---|---|
| Y | US 2022-0312010 A1 (OFINNO, LLC) 29 September 2022 (2022-09-29)<br>See paragraphs [0032], [0035], [0103], [0121]-[0136] and [0142]; claim 1; and figures 1, 17-18 and 21. | 1-14 |
| Y | OHM, Jens-Rainer. Meeting Report of the 28th Meeting of the Joint Video Experts Team (JVET). Mainz, DE. 20–28 October 2022. JVET-AB1000, Joint Video Experts Team (JVET) of ITU-T SG 16 WP 3 and ISO/IEC JTC 1/SC 29, 28th Meeting: Mainz, DE. pp. 1-261, 25 November 2022.<br>See pages 147-149. | 1-14 |
| Y | WO 2022-106281 A1 (INTERDIGITAL VC HOLDINGS FRANCE, SAS) 27 May 2022 (2022-05-27)<br>See paragraphs [0106] and [0109]; and figure 24. | 6-8 |
| A | EP 3528498 A1 (PANASONIC INTELLECTUAL PROPERTY CORPORATION OF AMERICA) 21 August 2019 (2019-08-21)<br>See claims 22-26. | 1-14 |

[✓] Further documents are listed in the continuation of Box C.     [✓] See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **25 March 2024** | **25 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/021895**

**C.     DOCUMENTS CONSIDERED TO BE RELEVANT**

| Category* | Citation of document, with indication, where appropriate, of the relevant passages | Relevant to claim No. |
|---|---|---|
| A | US 9326003 B2 (GUO, Liwei et al.) 26 April 2016 (2016-04-26)<br>    See claims 16-23. | 1-14 |

**INTERNATIONAL SEARCH REPORT**
**Information on patent family members**

International application No.

**PCT/KR2023/021895**

| Patent document cited in search report | | | Publication date (day/month/year) | Patent family member(s) | | | Publication date (day/month/year) |
|---|---|---|---|---|---|---|---|
| US | 2022-0312010 | A1 | 29 September 2022 | None | | | |
| WO | 2022-106281 | A1 | 27 May 2022 | CN | 116458154 | A | 18 July 2023 |
| | | | | EP | 4248650 | A1 | 27 September 2023 |
| | | | | KR | 10-2023-0104895 | A | 11 July 2023 |
| | | | | US | 2024-0031560 | A1 | 25 January 2024 |
| EP | 3528498 | A1 | 21 August 2019 | CN | 109983771 | A | 05 July 2019 |
| | | | | JP | 2019-092868 | A1 | 17 October 2019 |
| | | | | KR | 10-2019-0062585 | A | 05 June 2019 |
| | | | | US | 11736693 | B2 | 22 August 2023 |
| | | | | US | 2024-0031570 | A1 | 25 January 2024 |
| | | | | WO | 2018-092868 | A1 | 24 May 2018 |
| US | 9326003 | B2 | 26 April 2016 | CN | 102484706 | A | 30 May 2012 |
| | | | | CN | 102484706 | B | 16 September 2015 |
| | | | | EP | 2446627 | A1 | 02 May 2012 |
| | | | | EP | 2446627 | B1 | 13 September 2017 |
| | | | | JP | 2012-531808 | A | 10 December 2012 |
| | | | | JP | 5826747 | B2 | 02 December 2015 |
| | | | | KR | 10-1740039 | B1 | 25 May 2017 |
| | | | | KR | 10-2012-0096458 | A | 30 August 2012 |
| | | | | US | 2012-0106627 | A1 | 03 May 2012 |
| | | | | WO | 2010-151334 | A1 | 29 December 2010 |

Form PCT/ISA/210 (patent family annex) (July 2022)